(19) Europäisches Patentamt
European Patent Office
Office européen des brevets

(11) **EP 4 033 628 A1**

(12) **EUROPÄISCHE PATENTANMELDUNG**

(43) Veröffentlichungstag:
**27.07.2022   Patentblatt 2022/30**

(21) Anmeldenummer: **21153308.8**

(22) Anmeldetag: **25.01.2021**

(51) Internationale Patentklassifikation (IPC):
**H02J 3/16** (2006.01)   **H02J 3/38** (2006.01)
**G01R 21/133** (2006.01)   **F03D 7/02** (2006.01)

(52) Gemeinsame Patentklassifikation (CPC):
**H02J 3/16; H02J 3/381;** F03D 7/0284;
F05B 2270/1033; G01R 21/1331; H02J 2300/28

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH**
**26607 Aurich (DE)**

(72) Erfinder:
• **Brombach, Johannes**
 **13437 Berlin (DE)**
• **Woll, Kristof**
 **28195 Bremen (DE)**
• **Bakker, Menko**
 **26605 Aurich (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM ERFASSEN EINER VERLUSTLEISTUNG BEIM BETREIBEN EINER WINDENERGIEANLAGE ODER EINES WINDPARKS**

(57)   Die Erfindung betrifft ein Verfahren zum Erfassen einer Verlustleistung beim Betreiben eines wenigstens eine Windenergieanlage (100, 311, 312) aufweisenden Windenergiesystems (302), das elektrische Leistung an einem Netzanschlusspunkt in ein elektrisches Versorgungsnetz (316, 414) einspeist, wobei in einem aktuellen Arbeitspunkt des Windenergiesystems (302), elektrische Leistung in das elektrische Versorgungsnetz (316, 414) mit einem Wirkleistungsanteil und einem Blindleistungsanteil eingespeist wird, umfassend die Schritte, Erfassen einer durch das Einspeisen der elektrischen Leistung in dem aktuellen Arbeitspunkt verursachten Gesamtverlustleistung, und Schätzen einer durch das Einspeisen des Blindleistungsanteils in dem aktuellen Arbeitspunkt verursachten Blindleistungsverlustleistung ($P_{VQ}$), wobei die Blindleistungsverlustleistung ($P_{VQ}$) aus einer Differenz zwischen der Gesamtverlustleistung ($P_V$) und einer dem aktuellen Arbeitspunkt zugeordneten Wirkleistungsverlustleistung ($P_{VP}$) bestimmt wird, wobei die Wirkleistungsverlustleistung ($P_{VP}$) einer Verlustleistung eines Vergleichsarbeitspunktes entspricht, in dem gleich viel Wirkleistung ($P$) wie im aktuellen Arbeitspunkt eingespeist wird, aber keine Blindleistung eingespeist wird.

Fig. 3

**Beschreibung**

Die vorliegende Erfindung betrifft ein Verfahren zum Erfassen einer Verlustleistung beim Betreiben eines wenigstens eine Windenergieanlage aufweisenden Windenergiesystems. Außerdem betrifft die vorliegende Erfindung ein entsprechendes Windenergiesystem.

Ein Windenergiesystem betrifft eine Windenergieanlage oder einen Windpark mit mehreren Windenergieanlagen. Insbesondere geht es um einen Windpark. Die beschriebenen Probleme könnten aber auch bei einer einzelnen Windenergieanlage auftreten. Windparks sind bekannt, sie speisen elektrische Leistung aus Wind in ein elektrisches Versorgungsnetz ein, nämlich an einem Netzanschlusspunkt. Neben der Einspeisung von Wirkleistung zum Versorgen an das elektrische Versorgungsnetz angeschlossener Verbraucher kommt auch in Betracht, dass, besonders zur Netzstützung, Blindleistung von einem solchen Windpark eingespeist wird.

Blindleistung kann besonders auf eine Anforderung hin, insbesondere von einem Netzbetreiber, eingespeist werden. Dazu kann der Windpark beispielsweise einen Sollwert zum Einspeisen von Blindleistung erhalten. Er muss dann Blindleistung in dieser Höhe einspeisen.

Netzbetreiber nutzen die Netzeigenschaften moderner Windenergieanlagen und insbesondere Windparks immer mehr aus, um eine aktive Netzbetriebsführung durchzuführen. Dabei wird vor allem Blindleistung aus Windenergieanlagen zur Spannungshaltung und zum Blindleistungsbilanzausgleich eingesetzt.

Durch die Scheinstromerhöhung entstehen bei einem Blindleistungsabruf arbeitspunktabhängige Verluste in den Umrichtern, welche die Wirtschaftlichkeit von Windenergieanlagen und Windparks verschlechtert.

Grundsätzlich kann dafür eine Blindleistungsvergütung verlangt werden. Für eine Vergütung ist aber eine Erfassung der Verluste notwendig. Auch für eine Kosten-Nutzen-Planung wird eine Bestimmung tatsächlicher Verluste immer wichtiger.

Verluste des Windparks bzw. der Windenergieanlagen sind grundsätzlich bestimmbar, problematisch ist aber, die aktuellen Gesamtverluste der jeweiligen Ursache, also der Wirkleistungseinspeisung einerseits und der zusätzlichen Blindleistungseinspeisung andererseits zuzuordnen. Besonders wird das dadurch kompliziert, dass die Verlustleistung vom Arbeitspunkt abhängt und der Arbeitspunkt sich in Abhängigkeit von der Wirkleistungseinspeisung und der Blindleistungseinspeisung zusammensetzt, wobei aber keine lineare Überlagerung vorliegt.

Grundsätzlich setzen sich dabei die Verluste zumindest aus blindleistungsabhängigen Wirkleistungsverlusten und auch Umrichterverlusten zusammen und es wäre wünschenswert, diese zu erfassen.

Eine Möglichkeit zur Erfassung solcher Verluste bestände darin, eine modellbasierte, nachträgliche Bestimmung der blindleistungsbedingten Verluste durchzuführen. Eine solche Bestimmung ist aber sehr ungenau.

Der vorliegenden Erfindung liegt somit die Aufgabe zugrunde, zumindest eines der vorstehend genannten Probleme zu adressieren. Insbesondere soll möglichst genau eine Verlustleistung bestimmt werden bzw. eine resultierende Verlustenergie bestimmt werden, die durch eine Blindleistungseinspeisung hervorgerufen wird. Zumindest soll zu bisher bekannten Verfahren eine alternative Lösung vorgeschlagen werden.

Erfindungsgemäß wird ein Verfahren nach Anspruch 1 vorgeschlagen. Somit wird ein Verfahren zum Erfassen einer Verlustleistung beim Betreiben eines Windenergiesystems vorgeschlagen, das elektrische Leistung an einem Netzanschlusspunkt in ein elektrisches Versorgungsnetz einspeist. Das Windenergiesystem weist wenigstens eine Windenergieanlage auf. Das Windenergiesystem kann somit einer Windenergieanlage, einschließlich Infrastruktur bis zum Netzanschlusspunkt entsprechen, oder einem Windpark. Ein Windpark weist mehrere Windenergieanlagen auf, die über denselben Netzanschlusspunkt an das elektrische Versorgungsnetz angeschlossen sind.

Es wird weiter vorgeschlagen, dass in einem aktuellen Arbeitspunkt das Windenergiesystem elektrische Leistung in das elektrische Versorgungsnetz mit einem Wirkleistungsanteil und einem Blindleistungsanteil einspeist. Wirkleistung und Blindleistung werden also zugleich eingespeist und dieses kombinierte Einspeisen bestimmt somit auch den aktuellen Arbeitspunkt.

Hierbei wird nun das Erfassen einer durch das Einspeisen der elektrischen Leistung in dem aktuellen Arbeitspunkt verursachten Gesamtverlustleistung als ein Schritt vorgeschlagen. Diese Gesamtverlustleistung kann beispielsweise so erfasst werden, dass alle aktuellen Leitungsverluste in dem Windenergiesystem und alle Verluste in der Windenergieanlage, zumindest im Umrichtersystem, mit dem die elektrische Leistung zum Einspeisen vorbereitet wird, erfasst werden. Das kann beispielsweise über entsprechende Strom- und Spannungsmessungen erfolgen. Verluste im Generator brauchen nicht erfasst zu werden, da sie nicht benötigt werden und insbesondere nicht als durch das Einspeisen verursachte Verluste angesehen werden, zumindest vernachlässigt werden können.

Als weiterer Vorschlag wird ein Schätzen einer durch das Einspeisen des Blindleistungsanteils in dem aktuellen Arbeitspunkt verursachten Blindleistungsverlustleistung vorgeschlagen. Die Blindleistungsverlustleistung ist somit die Verlustleistung, die dem Blindleistungsanteil zugeordnet werden kann. Sie kann nicht ohne Weiteres gemessen werden und wird daher wie nachfolgend erläutert geschätzt.

Die Blindleistungsverlustleistung wird dabei aus einer Differenz zwischen der Gesamtverlustleistung und einer dem aktuellen Arbeitspunkt zugeordneten Wirkleistungsverlustleistung bestimmt. Die Wirkleistungsverlustleistung entspricht einer Verlustleistung eines Vergleichsarbeitspunktes, in dem gleich viel Wirkleistung wie im aktuellen Arbeitspunkt eingespeist wird, aber keine Blindleistung eingespeist wird.

Die Wirkleistungsverlustleistung ist somit eine Verlustleistung, die in einem Arbeitspunkt entsteht, in dem ausschließlich Wirkleistung eingespeist wird. Ein solcher Arbeitspunkt ist der genannte Vergleichsarbeitspunkt.

Im einfachsten Fall kann also das Windenergiesystem in dem Vergleichsarbeitspunkt in einer Voruntersuchung betrieben werden. Dazu wird genau so viel Wirkleistung eingespeist wie nun im aktuellen Arbeitspunkt, es wird aber keine Blindleistung eingespeist.

Natürlich können sehr unterschiedliche Arbeitspunkte auftreten, auch mit unterschiedlich viel Wirkleistungseinspeisung, was insbesondere vom verfügbaren Wind abhängt. Daher können für viele Vergleichsarbeitspunkte Wirkleistungsverlustleistung aufgenommen werden. Das wird im Detail in Ausführungsformen später noch beschrieben. Jedenfalls ist auch für jeden Vergleichsarbeitspunkt seine Verlustleistung, die dann die Wirkleistungsverlustleistung bildet, da keine Blindleistung eingespeist wird, besonders auch so zu erfassen, dass alle Verluste der Leitungen des Windenergiesystems und Verluste der einen oder der mehreren Windenergieanlagen, insbesondere ihrer Umrichter, erfasst werden. Die so erfasste Verlustleistung kann als Wirkleistungsverlustleistung mit dem Vergleichsarbeitspunkt zusammen abgespeichert werden.

Um dann die Blindleistungsverlustleistung des aktuellen Arbeitspunktes zu schätzen, wird somit wie folgt vorgegangen. Es wird für den aktuellen Arbeitspunkt ein passender Vergleichsarbeitspunkt im Speicher gesucht und die mit ihm zusammen abgespeicherte Wirkleistungsverlustleistung verwendet und von der Gesamtverlustleistung des aktuellen Arbeitspunktes abgezogen. Das Ergebnis ist die gesuchte Blindleistungsverlustleistung.

Hier liegt besonders folgende Überlegung zugrunde. Der aktuelle Arbeitspunkt verursacht in den meisten Fällen durch die Blindleistungseinspeisung mehr Verlustleistung. Diese entsteht nicht nur unmittelbar durch den Blindleistungsanteil, sondern auch dadurch, dass das Windenergiesystem insgesamt mehr belastet ist. Beispielsweise könnte an einem elektrischen Bauteil wie einer Drossel, einem Transformator oder einer Übertragungsleitung eine Verlustleistung berechnet werden, die durch den Blindleistungsanteil entsteht. Dabei würde aber unberücksichtigt bleiben, dass die Blindleistung nicht alleine eingespeist wird, sondern zusammen mit der Wirkleistung, was insbesondere zu einer höheren Temperatur in den genannten Bauteilen führen kann. Das führt zu einer zusätzlichen Erhöhung der durch die Blindleistungseinspeisung verursachten Verlustleistung. Diese zusätzliche Verlustleistung kann allein durch die Betrachtung der Einspeisung des Blindleistungsanteils nicht ohne Weiteres berücksichtigt werden.

Daher wird die genannte Lösung vorgeschlagen. Die genannte Lösung kann somit nämlich die tatsächliche Verlustleistung bei reiner Wirkleistungseinspeisung erfassen und jegliche zusätzliche Verlustleistung im aktuellen Arbeitspunkt ist somit der zusätzlichen Blindleistungseinspeisung zuzuordnen.

Gemäß einem Aspekt wird vorgeschlagen, dass in Voruntersuchungen jeweils in wenigstens einem Referenzarbeitspunkt, Wirkleistung, aber keine Blindleistung eingespeist wird, eine Verlustleistung als Referenzverlustleistung erfasst wird, und die erfasste Referenzverlustleistung zusammen mit der eingespeisten Wirkleistung des Referenzarbeitspunktes als Referenzwerte abgespeichert werden. Die Wirkleistungsverlustleistung des aktuellen Arbeitspunktes kann aus wenigstens einer abgespeicherten Referenzverlustleistung jeweils eines Referenzarbeitspunktes bestimmt werden.

Für solche Voruntersuchungen kann die Windenergieanlage gezielt in solchen Referenzarbeitspunkten betrieben werden, also mit Wirkleistungseinspeisung, aber ohne Blindleistungseinspeisung. Zu jedem Referenzarbeitspunkt kann die Verlustleistung erfasst und abgespeichert werden. Sie bildet somit eine Referenzverlustleistung des betreffenden Referenzarbeitspunktes. Sie wird zusammen mit der eingespeisten Wirkleistung als Referenzwert abgespeichert.

Hierdurch soll eine Datenbank aufgebaut werden, die zu möglichst vielen Referenzarbeitspunkten eine Referenzverlustleistung aufweist. Die Referenzverlustleistung ist dann jeweils der eingespeisten Wirkleistung zugeordnet. Wird also zu einem Wirkleistungswert des aktuellen Arbeitspunktes die Wirkleistungsverlustleistung gesucht, kann diese in der Datenbank gefunden werden, indem zu der eingespeisten Wirkleistung des aktuellen Arbeitspunktes die Referenzverlustleistung, die dazu abgespeichert wurde, verwendet wird. Die so gefundene Referenzverlustleistung kann im einfachsten Fall unmittelbar die gesuchte Wirkleistungsverlustleistung bilden. Es kommt aber auch in Betracht, dass die gefundene Referenzverlustleistung noch weiter modifiziert werden muss.

Eine weitere Modifizierung kommt besonders für zwei Fälle in Betracht. In dem einen Fall existiert (noch) kein Referenzarbeitspunkt, dessen eingespeiste Wirkleistung exakt der eingespeisten Wirkleistung des aktuellen Arbeitspunktes entspricht. Im zweiten Fall, der mit dem ersten Fall auch kombiniert sein kann, weichen andere Randbedingungen voneinander ab. So kommt in Betracht, dass, um ein einfaches Beispiel zu wählen, zu einem aktuellen Arbeitspunkt ein Referenzarbeitspunkt mit gleicher Wirkleistungseinspeisung existiert, beide Arbeitspunkte aber zu unterschiedlichen Außentemperaturen aufgenommen wurden. Das kann Auswirkungen auf die Verlustleistung haben, die zu berücksichtigen sind.

Das Aufnehmen der Referenzarbeitspunkte in Voruntersuchungen kann auch dadurch erfolgen, dass die Windenergieanlage ganz normal betrieben wird. In einem solchen normalen Betriebsfall kommen häufig auch Arbeitspunkte vor, in denen keine Blindleistung eingespeist wird, sondern nur Wirkleistung. Solche Arbeitspunkte können dann als Referenzarbeitspunkte verwendet werden und die Wirkleistung des Referenzarbeitspunktes zusammen mit der Verlustleistung abgespeichert werden. Dadurch kann im laufenden Betrieb der Windenergieanlage eine Datenbank nach und nach aufgebaut werden. Sollte es Wirkleistungsbereiche geben, in denen grundsätzlich immer Blindleistung eingespeist wird, so können hier außer der Reihe zum Zwecke von Voruntersuchungen gezielt Arbeitspunkte ohne Blindleistungseinspeisung angefahren werden.

Optional wird vorgesehen, dass die erfasste Referenzverlustleistung zusammen mit der eingespeisten Wirkleistung und zusätzlich mit wenigstens einer Randbedingung des Vergleichsarbeitspunktes als Referenzwerte abgespeichert werden. Eine solche Randbedingung kann beispielsweise eine Netzspannung sein. Hier wurde erkannt, dass solche Randbedingungen zusätzlich zu der Wirkleistungseinspeisung den aktuellen Arbeitspunkt und auch den Referenzarbeitspunkt, und damit auch den Vergleichsarbeitspunkt, gleichermaßen kennzeichnen können. Liegt die Netzspannung beispielsweise um 10 Volt über einer Netznennspannung, kann das das Einspeisen erschweren und dadurch zu höheren Verlustleistungen führen. Dieser Effekt kann für die Einspeisung mit oder ohne Blindleistung auftreten. Liegt also die Netzspannung beim aktuellen Arbeitspunkt um die beispielhaft genannten 10 Volt oberhalb der Netznennspannung, sollte der Referenzarbeitspunkt idealerweise auch zu einer Netzspannung gehören, die 10 Volt oberhalb der Netznennspannung lag.

Selbst wenn eine solche Koinzidenz nicht unbedingt erreicht werden kann, besonders dann, wenn noch weitere Randbedingungen berücksichtigt werden, so ist es doch wichtig, diese Randbedingungen zu berücksichtigen. Dafür sollen sie mit abgespeichert werden. Liegen Abweichungen zwischen den Randbedingungen des aktuellen Arbeitspunktes und des verwendeten Referenzarbeitspunktes vor, so können sie gegebenenfalls herausgerechnet werden.

Insbesondere wird vorgeschlagen, dass die Wirkleistungsverlustleistung des aktuellen Arbeitspunktes aus wenigstens einer abgespeicherten Referenzverlustleistung jeweils eines Referenzarbeitspunktes so bestimmt wird, dass in Abhängigkeit von dem aktuellen Arbeitspunkt ein Referenzarbeitspunkt ausgewählt wird, und die dazu abgespeicherte Referenzverlustleistung als Wirkleistungsverlustleistung verwendet wird, oder die Wirkleistungsverlustleistung aus der abgespeicherten Referenzverlustleistung extrapoliert wird. Der Referenzarbeitspunkt wird idealerweise so ausgewählt, dass er dieselbe eingespeiste Wirkleistung aufweist wie der aktuelle Arbeitspunkt. Wenn dann auch etwaige Randbedingungen entweder vernachlässigbar erscheinen oder ausreichend ähnlich sind, so kann die zu diesem Referenzarbeitspunkt abgespeicherte Referenzverlustleistung die gesuchte Wirkleistungsverlustleistung des aktuellen Arbeitspunktes bilden. Das bildet allerdings eher ein Idealfall, der aber auch das Prinzip gut erläutert.

Treten aber beispielsweise Abweichungen zwischen der eingespeisten Wirkleistung des Referenzarbeitspunktes einerseits und des aktuellen Arbeitspunktes andererseits auf, so kann eine Extrapolation durchgeführt werden. Wurde beispielsweise ein Referenzarbeitspunkt gefunden und ausgewählt, bei dem die eingespeiste Wirkleistung des aktuellen Arbeitspunktes um 10 % über der eingespeisten Wirkleistung des Referenzarbeitspunktes liegt, so kann dies für die Wirkleistungsverlustleistung entsprechend berücksichtigt werden. In dem beispielhaften Fall kann also für die Wirkleistungsverlustleistung des aktuellen Arbeitspunktes ein Wert genommen werden, der um 10 % über der Referenzverlustleistung des Referenzarbeitspunktes liegt.

Ähnlich kann auch mit Abweichungen hinsichtlich Randbedingungen umgegangen werden. Ist beispielsweise bekannt, dass, um das Beispiel von oben aufzugreifen, eine gegenüber der Netznennspannung um 10 % erhöhte Netzspannung zu einer Erhöhung der Verlustleistung von etwa 5 % führt, so kann dies entsprechend berücksichtigt werden. Es kann also, um es allgemein auszudrücken, ein Zusammenhang erfasst werden zwischen einer Spannungsüberhöhung oder Verringerung der Netzspannung jeweils in Bezug auf die Netznennspannung einerseits und einer entsprechend erhöhten oder verringerten Verlustleistung andererseits.

Solche Zusammenhänge können durch weitere Voruntersuchungen erfasst worden sein. So ist es möglich, dass ein solcher Zusammenhang zwischen Spannungsüberhöhung und Verlustleistungsüberhöhung für Referenzarbeitspunkte anderer Wirkleistungswerte erfasst wurde als der Wirkleistungswert des aktuellen Arbeitspunktes und damit des ausgewählten Referenzarbeitspunktes. Es kann davon ausgegangen werden, dass der Einfluss der Randbedingungen klein genug ist, dass er von einem Wert eingespeister Wirkleistung zu einem anderen Wert eingespeister Wirkleistung übertragbar ist.

Es kommt auch in Betracht, dass zur Bestimmung der Wirkleistungsverlustleistung des aktuellen Arbeitspunktes aus wenigstens einer abgespeicherten Referenzverlustleistung jeweils eines Referenzarbeitspunktes in Abhängigkeit von dem aktuellen Arbeitspunkt mehrere Referenzarbeitspunkte ausgewählt werden und die Wirkleistungsverlustleistung aus den dazu abgespeicherten Referenzverlustleistungen interpoliert oder extrapoliert wird. Es kommt hier insbesondere in Betracht, dass zwei Referenzarbeitspunkte ausgewählt werden, die unterschiedliche eingespeiste Wirkleistung aufweisen, wobei die eingespeiste Wirkleistung des aktuellen Arbeitspunktes zwischen diesen beiden unterschiedlichen Wirkleistungswerten der beiden Referenzarbeitspunkte liegt. Mit anderen Worten liegt der ideale Referenzarbeitspunkt zwischen diesen beiden ausgewählten Referenzarbeitspunkten. Entsprechend kann zwischen diesen beiden ausgewählten, also vorhandenen bzw. abgespeicherten Referenzarbeitspunkten interpoliert werden.

Es kommt aber auch in Betracht, dass aus zwei oder mehreren Referenzarbeitspunkten extrapoliert wird, wenn beispielsweise beide ausgewählte Referenzarbeitspunkte unterschiedliche eingespeiste Wirkleistungswerte aufweisen, die aber beide geringer sind als die eingespeiste Wirkleistung des aktuellen Arbeitspunktes. Eine etwaige Verlustleistungszunahme der Referenzverlustleistungen der beiden Referenzarbeitspunkte kann dann linear bis zum aktuellen Arbeitspunkt extrapoliert werden. In diesem Sinne kommt grundsätzlich auch in Betracht, dass mehr als zwei Referenzarbeitspunkte ausgewählt werden und beispielsweise eine Kurve entsprechender Ordnung gefunden wird.

Gleiches gilt auch für das Interpolieren. Hier ist auch zu berücksichtigen, dass zusätzlich zu dem Interpolieren oder Extrapolieren hinsichtlich unterschiedlicher zugrundeliegender Wirkleistungswerte zusätzlich noch Randbedingungen berücksichtigt werden können. Idealerweise wird wenigstens ein Referenzarbeitspunkt mehr ausgewählt als veränderliche Parameter zu berücksichtigen sind. Werden also neben der Wirkleistung als ein Parameter zwei Randbedingungen als zwei weitere Parameter berücksichtigt, so liegen drei Parameter vor und es können dann vier Referenzarbeitspunkte berücksichtigt werden, um diese drei Parameter durch Interpolieren oder Extrapolieren, oder eine Kombination davon, zu berücksichtigen.

Gemäß einem Aspekt wird vorgeschlagen, dass dann, wenn das Windenergiesystem mehrere Windenergieanlagen aufweist, zum Bestimmen der Wirkleistungsverlustleistung in Voruntersuchungen jede Windenergieanlage jeweils in wenigstens einem Anlagenreferenzarbeitspunkt mit einer Anlagenwirkleistung betrieben wird, jeweils eine Verlustleistung der Windenergieanlage als Anlagenreferenzverlustleistung erfasst wird und die erfasste Anlagenreferenzverlustleistung und die zugehörige Anlagenwirkleistung abgespeichert werden. Optional wird zusätzlich eine abgegebene Blindleistung abgespeichert und außerdem oder alternativ kann zusätzlich auch wenigstens eine Randbedingung mit abgespeichert werden.

Insoweit kommt in Betracht, dass von der jeweiligen Windenergieanlage eine Blindleistung abgegeben wurde. Die Summe aller abgegebenen Blindleistungen der Windenergieanlagen kann aber null sein, sodass am Netzanschlusspunkt, der synonym auch als Netzverknüpfungspunkt bezeichnet werden kann, keine Blindleistung eingespeist wird.

Als Randbedingungen kommen hier auch insbesondere wieder die Netzspannung in Betracht, sowie weitere Randbedingungen, die vorstehend schon beschrieben wurden oder nachstehend noch beschrieben werden.

Es ist nun vorgesehen, dass die Wirkleistungsverlustleistung des aktuellen Arbeitspunktes aus jeweils wenigstens einer abgespeicherten Anlagenreferenzverlustleistung jeder Windenergieanlage bestimmt wird.

Hier wurde besonders erkannt, dass die Verlustleistungen besonders an der Windenergieanlage auftreten und dort auch gut erfasst werden können. Daher wird eine Einzelbetrachtung jeder einzelnen Windenergieanlage vorgeschlagen.

Zu jeder Windenergieanlage wurde somit wenigstens eine Anlagenreferenzverlustleistung zusammen mit der zugehörigen Anlagenwirkleistung abgespeichert. Ausgehend von dem Wirkleistungsanteil des aktuellen Arbeitspunktes werden somit entsprechende Anlagenreferenzarbeitspunkte bzw. die dazu abgespeicherten Werte gesucht und abgerufen, um eine Wirkleistungsverlustleistung des aktuellen Arbeitspunktes zu ermitteln.

Weist der aktuelle Arbeitspunkt beispielsweise eine Wirkleistung von 20 MW auf, die gleichmäßig auf zehn Windenergieanlagen verteilt ist, so weist jede Windenergieanlage eine Wirkleistung von 2 MW auf. Dazu passend, also zu den 2MW passend, wird jeweils entsprechend der Anlagenreferenzarbeitspunkt und die dazu abgespeicherten Referenzwerte ausgewählt und abgerufen.

Es kommt aber auch in Betracht, dass der Wirkleistungsanteil des aktuellen Arbeitspunktes nicht gleich verteilt ist. Ein Grund hierfür kann zum Beispiel sein, dass die Windenergieanlagen nicht gleich groß sind und/oder die Windstandorte der einzelnen Windenergieanlagen sich unterscheiden, sodass die Windenergieanlagen unterschiedlich viel Wind erhalten, um nur zwei Beispiele zu nennen, die auch kombiniert auftreten können. Idealerweise werden die Anlagenreferenzarbeitspunkte zum Bestimmen der Wirkleistungsverlustleistung des aktuellen Arbeitspunktes so gewählt, dass die Summe ihrer Anlagenwirkleistungen dem Wirkleistungsanteil des aktuellen Arbeitspunktes entspricht.

Insbesondere wird vorgeschlagen, dass zu jeder Windenergieanlage in Abhängigkeit von dem Wirkleistungsanteil des aktuellen Arbeitspunktes eine abgespeicherte Anlagenreferenzverlustleistung abgerufen oder extrapoliert, oder aus mehreren abgespeicherten Anlagenreferenzverlustleistungen durch Interpolation oder Extrapolation bestimmt wird. Insoweit wird hier für jede einzelne Windenergieanlage so vorgegangen wie dies oben bereits insgesamt für das Windenergiesystem erläutert wurde.

Die Wirkleistungsverlustleistung wird dann aus einer Summe aller abgerufenen bzw. durch Interpolation oder Extrapolation bestimmten Anlagenreferenzverlustleistungen bestimmt.

Die Randbedingungen können für jede Windenergieanlage einzeln betrachtet werden, um dadurch für jede Windenergieanlage einzeln einen möglichst guten Wert der Anlagenreferenzverlustleistung zu erhalten. Als weitere Größe kommt hier auch die Betrachtung einer von jeweils einer Windenergieanlage abgegebenen Blindleistung in Betracht. Die Referenzwerte sollen für eine Situation bestimmt werden, bei der die eingespeiste Blindleistung null ist. Bei der Verwendung eines Windparks, wenn das Windenergiesystem also mehrere Windenergieanlagen aufweist und damit ein Windpark ist, kommt aber in Betracht, dass die einzelnen Windenergieanlagen Blindleistung abgeben, am Netzanschlusspunkt aber keine Blindleistung eingespeist wird. Ein Grund hierfür kann eine gegenseitige Aufhebung der einzelnen Blindleistungen der jeweiligen Windenergieanlagen sein. Es wird somit vorgeschlagen, dass die Anlagenreferenzarbeitspunkte so ausgewählt werden, dass sie insgesamt zu einem Gesamtreferenzarbeitspunkt des Windenergiesystems führen, bei dem keine Blindleistung eingespeist wird.

Es kommt auch in Betracht, dass selbst bei einer einzelnen Windenergieanlage diese Blindleistung abgibt, diese aber vollständig auf dem Übertragungswege von der Windenergieanlage zum Netzanschlusspunkt, also insbesondere auf einer Parkleitung von der Windenergieanlage zum Netzanschlusspunkt "verbraucht" wird. Die Windenergieanlage gibt also einen Scheinstrom ab, der eine Phasenlage ungleich null aufweist, wobei diese Phasenverschiebung an der Impedanz zwischen Windenergieanlage und Netzanschlusspunkt aber kompensiert wird. Am Netzanschlusspunkt ist die Phasenlage dann also null.

Hier wurde besonders erkannt, dass eine Blindleistungsvergütung grundsätzlich für Blindleistung in Betracht kommt, die in das elektrische Versorgungsnetz eingespeist wird, nicht aber für Blindleistung, die innerhalb des Windparks benötigt bzw. verbraucht wird.

Gemäß einem Aspekt wird vorgeschlagen, dass der Vergleichsarbeitspunkt und der aktuelle Arbeitspunkt jeweils aus Anlagenarbeitspunkten gebildet werden, insbesondere so, dass der Wirkleistungsanteil des aktuellen Arbeitspunktes bzw. des Vergleichsarbeitspunktes aus einer Summe der Wirkleistungen der Anlagenarbeitspunkte aller Windenergieanlagen gebildet wird, und der Blindleistungsanteil des aktuellen Arbeitspunktes bzw. des Vergleichsarbeitspunktes aus einer Summe aller Blindleistungen der Anlagenarbeitspunkte aller Windenergieanlagen und des Blindleistungsbedarfs des Parknetzes gebildet wird.

Hiermit wird verdeutlicht, wie sich der aktuelle Arbeitspunkt und der Vergleichsarbeitspunkt zusammensetzen, wenn nämlich das Windenergiesystem mehrere Windenergieanlagen aufweist.

Der Blindleistungsanteil des Vergleichsarbeitspunktes sollte aber null sein, sodass die Summe aller Blindleistungen der Anlagenarbeitspunkte und des Blindleistungsbedarfs des Parknetzes, mit anderen Worten also des Blindleistungsverbrauchs des Parknetzes, null ist.

Insbesondere werden die Anlagenarbeitspunkte für den Vergleichsarbeitspunkt so ausgewählt, dass die Summe ihrer Wirkleistungen der Summe der Wirkleistung für den Fall des aktuellen Arbeitspunktes entsprechen.

Die Summe aller Blindleistungen der Anlagenarbeitspunkte und des Blindleistungsbedarfs des Parknetzes sollte für den Vergleichsarbeitspunkt null sein. Das bedeutet insbesondere, dass die Summe aller Blindleistungen der Anlagenarbeitspunkte des Vergleichsarbeitspunktes dem Betrage nach dem Blindleistungsbedarf des Parknetzes bzw. dem Blindleistungsverbrauch des Parknetzes entspricht. Die Blindleistungen der einzelnen Anlagen des Vergleichsarbeitspunktes werden also nur zur Befriedigung des Blindleistungsbedarfs des Parknetzes verwendet.

Gemäß einem Aspekt wird vorgeschlagen, dass eine oder die in Voruntersuchungen erfasste Referenzverlustleistung zusammen mit einer oder mehreren Arbeitspunktrandbedingungen abgespeichert wird. Solche Arbeitspunktrandbedingungen kennzeichnen somit den jeweiligen Referenzarbeitspunkt oder Anlagenreferenzarbeitspunkt. Hier wurde besonders erkannt, dass der Referenzarbeitspunkt oder Anlagenreferenzarbeitspunkt zusätzlich zu seiner Wirkleistung durch weitere Arbeitspunktrandbedingungen spezifiziert sein kann. Zur Bestimmung der Wirkleistungsverlustleistung des aktuellen Arbeitspunktes kann somit ein oder mehrere Referenzarbeitspunkte, ein oder mehrere Anlagenreferenzarbeitspunkte besser gefunden werden.

Solche Arbeitspunktrandbedingungen können eine Netzspannung des elektrischen Versorgungsnetzes, eine von wenigstens einer Windenergieanlage erzeugte Blindleistung, eine Zwischenkreisspannung eines Wechselrichters der wenigstens einen Windenergieanlage, und eine Außentemperatur sein. Diese Arbeitspunktrandbedingungen können auch kombiniert werden, es können also mehrere verwendet werden, um den jeweiligen Arbeitspunkt möglichst genau zu spezifizieren. Insbesondere wird vorgeschlagen, die Netzspannung und die Blindleistung zu erfassen und als Arbeitspunktrandbedingungen jeweils mit abzuspeichern.

Hier wurde besonders erkannt, dass die Höhe der Netzspannung beeinflussen kann, wie die jeweiligen Windenergieanlagen arbeiten, um einen Einspeisestrom einzuspeisen. Je höher die Netzspannung ist, umso aufwendiger kann es sein, den einzuspeisenden Strom gegen diese Netzspannung in das Netz einzuspeisen.

Aus diesem Grund kann auch die Betrachtung der Zwischenkreisspannung eines Wechselrichters der wenigstens einen Windenergieanlage sinnvoll sein, denn die Zwischenkreisspannung kann ein Indikator für die Netzspannung sein, die Zwischenkreisspannung kann aber auch den Arbeitspunkt der Windenergieanlage kennzeichnen. Außerdem kann das Einspeisen umso einfacher sein, je höher die Zwischenkreisspannung ist.

Es wird auch vorgeschlagen, eine von der jeweiligen Windenergieanlage erzeugte Blindleistung aufzunehmen und als Arbeitspunktrandbedingungen abzuspeichern. Zum Bestimmen des Referenzarbeitspunktes bzw. der Anlagenreferenzarbeitspunkte soll keine Blindleistung in das elektrische Versorgungsnetz eingespeist werden. Mit anderen Worten soll die Wirkleistungsverlustleistung als Verlustleistung eines Vergleichsarbeitspunktes bestimmt werden, indem gleich viel Wirkleistung wie im aktuellen Arbeitspunkt eingespeist wird, aber keine Blindleistung eingespeist wird. Gleichwohl kommt aber in Betracht, dass von den Windenergieanlagen eine Blindleistung erzeugt wird, die aber in dem Windpark verbraucht wird, sodass eine Blindleistung auf Parkebene erfasst werden kann, insbesondere pro Windenergieanlage, gleichwohl aber keine Blindleistung am Netzanschlusspunkt bzw. Netzverknüpfungspunkt eingespeist wird.

Es kommt auch in Betracht, dass eine einzelne Windenergieanlage, die solitär an einem Netzverknüpfungspunkt einspeist, eine Blindleistung erzeugt, die besonders auf der Übertragungsstrecke von der Windenergieanlage zum Netzanschlusspunkt bzw. Netzverknüpfungspunkt verbraucht wird.

Die Außentemperatur, die insbesondere an einer Windenergieanlage, zum Beispiel am Turmfuß oder auf der Gondel gemessen wird, kann auch eine Arbeitspunktrandbedingung bilden. Hier wurde besonders erkannt, dass zwischen Sommer und Winter und/oder tags und nachts trotz gleicher Wirkleistung, Blindleistung und Netzspannung unterschiedliche Verlustleistungen auftreten können.

Gemäß einem Aspekt wird vorgeschlagen, dass zum Erfassen von Verlustleistungen der Windenergieanlagen jeweils eine, mehrere oder alle der folgenden Verlustleistungsrandbedingungen erfasst und verwendet werden. Diese möglichen Verlustleistungsrandbedingungen sind die Netzspannung des elektrischen Versorgungsnetzes, eine Zwischenkreisspannung eines Wechselrichters der Windenergieanlage, eine Kühlwassertemperatur des Wechselrichters der Windenergieanlage, eine Schaltfrequenz des Wechselrichters, eine aktuelle Toleranzbandweite des Wechselrichters und eine Temperatur wenigstens eines Halbleiterschalters des Wechselrichters der Windenergieanlage. Zu der Windenergieanlage können auch Elemente gerechnet werden, die außerhalb der Windenergieanlage angeordnet sind, zumindest ausgangsseitig des jeweiligen Wechselrichters angeordnet sind. Dazu gehören besonders Drosseln.

Die Verlustleistungen der Windenergieanlagen hängen natürlich im Wesentlichen von dem eingespeisten Strom bzw. der abgegebenen Leistung ab, sei es nun Schein- oder Wirkstrom bzw. Schein- oder Wirkleistung. Derselbe Wirkstrom kann aber zu unterschiedlichen Verlustleistungen führen und die können von den genannten Verlustleistungsrandbedingungen abhängen.

Die Netzspannung kann den aktuellen Arbeitspunkt beeinflussen, wie oben ausgeführt wurde; das beeinflusst auch die Verlustleistung.

Aus den oben genannten Gründen kann auch eine Zwischenkreisspannung des Wechselrichters der Windenergieanlage die Verlustleistung beeinflussen. Bei einer hohen Zwischenkreisspannung kann im Grunde besser ein Strom eingespeist werden, allerdings können größere Verluste dabei entstehen, einen Generatorstrom in einen Gleichspannungszwischenkreis mit einer hohen Zwischenkreisspannung einzugeben. Beides kann Einfluss auf die Verlustleistung des jeweiligen Wechselrichters haben.

Eine Kühlwassertemperatur des Wechselrichters lässt auf die erzeugte Wärmeenergie Rückschlüsse zu, die beim Betreiben des Wechselrichters entstanden und an das Kühlwasser abgegeben wurde. Die Kühlwassertemperatur allein ist aber nicht aussagekräftig, da die Halbleiterschalter, die damit gekühlt werden, ihre Temperatur nicht ausschließlich an das Kühlwasser abgeben. Aber als Randbedingung ist eine solche Kühlwassertemperatur gut geeignet.

Eine Temperatur wenigstens eines Halbleiterschalters des Wechselrichters lässt ebenfalls einen Rückschluss zu auf in dem jeweiligen Halbleiterschalter umgesetzte Leistung. Besonders kann die Temperatur des Halbleiterschalters zusammen mit der Kühlwassertemperatur einen guten Rückschluss auf die in Wärme umgesetzte Energie und damit auf Verluste zulassen. Anschaulich ausgedrückt kann ein Halbleiterschalter bei Umsetzung gleicher thermischer Verluste unterschiedlich hohe Temperaturen aufweisen, abhängig davon, wie gut er gekühlt wird und damit abhängig von der Kühlwassertemperatur.

Eine Temperatur eines Halbleiterschalters kann eine Temperatur auf dem Halbleiterschalter, auf einem sogenannten Bonding, mit dem der Halbleiterschalter kontaktiert ist, oder eine Temperatur in dem Halbleiterschalter betreffen. Für eine Temperatur in dem Halbleiterschalter kann ein entsprechender Temperaturfühler in den Halbleiterschalter integriert sein, oder die Temperatur im Inneren des Halbleiterschalters kann aus anderen Temperaturen, die besser messbar sind, ermittelt werden, insbesondere aus Temperaturverläufen anderer, besser erfassbarer Temperaturen.

Eine Schaltfrequenz des Wechselrichters kann ebenfalls zur Erfassung der Verlustleistungen hilfreich sein. Auch hier ist gut erklärbar, dass die Schaltfrequenz alleine wenig Aussagekraft hat und erst zusammen mit der Amplitude des eingespeisten Stroms, oder einer vergleichbaren Größe, aussagekräftig wird. Die Schaltfrequenz steht nämlich weniger im Zusammenhang mit der Höhe des eingespeisten Stroms, also bezogen auf seinen Effektivwert, als vielmehr mit der Qualität des zu erzeugenden sinusförmigen Stroms.

Ähnlich verhält es sich mit einer Toleranzbandbreite des Wechselrichters, wenn dieser nämlich mittels eines Toleranzbandverfahrens einen sinusförmigen Strom erzeugt. Je schmaler das Toleranzband ist, je geringer also die Toleranzbandweite ist, umso höher kann auch die Schaltfrequenz des Wechselrichters werden. Auch hier hängt die Toleranzbandweite nicht unbedingt mit der absoluten Höhe des eingespeisten Stroms zusammen.

Je schneller geschaltet wird, umso öfter wird somit auch geschaltet und Verluste an Halbleiterbauelementen treten insbesondere durch den Schaltvorgang auf. Dabei kommt es aber auch auf die Höhe des Stroms an, denn je höher der zu erzeugende Strom ist, umso höher ist auch der Strom, der durch den jeweiligen Halbleiter fließt.

Insbesondere wird vorgeschlagen, dass diese Verlustleistungsrandbedingungen erfasst werden, und daraus die Verlustleistungen abgeleitet werden. Hierzu können Modelle erstellt oder verwendet werden, die entsprechende Zusammenhänge zwischen diesen Randbedingungen und natürlich auch dem absolut erzeugten Strom herstellen. Existieren solche Zusammenhänge nicht, so können diese in Voruntersuchungen ermittelt werden. Gegebenenfalls können sie auch in Testvorrichtungen ermittelt werden, in denen beispielsweise mehr Messtechnik zum Erfassen solcher Verluste vorhanden ist als in einer normalen Windenergieanlage im normalen Betrieb. Sind diese Zusammenhänge bekannt, so kann es ausreichen, den eingespeisten Strom und die Verlustleistungsrandbedingungen zu betrachten, um die Verlustleistungen darauf basierend zu erfassen.

Gemäß einem Aspekt wird vorgeschlagen, dass zum Erfassen der Verlustleistungen der Windenergieanlagen bzw. einer der Windenergieanlagen eine, mehrere oder alle der folgenden Verlustleistungen gemessen, berechnet oder anderweitig erfasst werden. Dazu gehören Durchlassverluste, insbesondere von Halbleitern und Dioden jeweils einer bzw. der Wechselrichteranordnung, Verluste an Drosseln an einem Ausgang der Wechselrichteranordnung, Verluste an Leitungen zwischen einer Windenergieanlage und einem bzw. dem Netzanschlusspunkt, und Schaltverluste, insbesondere von Halbleiterschaltern der Wechselrichteranordnung und/oder von Dioden der Wechselrichteranordnung. Insbesondere wird vorgeschlagen, dass die Schaltverluste zu jedem Schaltvorgang berechnet werden.

Durchlassverluste betreffen besonders Halbleiter und Dioden. Besonders wenn der Strom fließt, gibt es Spannungsabfälle an Sperrschichten, die zu entsprechenden Durchlassverlusten führen. Diese können bei Kenntnis des Stroms und der anliegenden Spannung sowie der Eigenschaften des betreffenden Halbleiterbauteils erfasst werden.

Verluste an Drosseln können auch nicht nur von der Stromhöhe, sondern auch von der Stromqualität, besonders Welligkeit abhängen und bei entsprechender Kenntnis der Stromcharakteristik und der Drossel berechnet werden.

Ähnliches gilt für Verluste an Leitungen, insbesondere Übertragungsleitungen, die von der Windenergieanlage zum Netzanschlusspunkt reichen. Verluste an solchen Leitungen können auch von der Stromcharakteristik zusätzlich abhängen. Es kommen auch Leitungsverluste in Schaltschränken der Windenergieanlagen in Betracht.

Schaltverluste betreffen besonders den jeweiligen Übergang zwischen sperrendem und durchlassendem Halbleiterbauelement. Hier gibt es einen Übergangsbereich, in dem beim Schalten der Strom ansteigt und die Spannung abfällt, oder umgekehrt. Dies kann das Schalten eines Halbleiterschalters betreffen, der dazu entsprechend angesteuert wird. Es kann aber auch das indirekte Schalten einer Diode durch Spannungsbzw. Stromumkehr betreffen. Solche Schaltvorgänge können beobachtet und die Schaltverluste abgeleitet werden, insbesondere, wenn die verwendeten Halbleiterbauelemente entsprechend bekannt sind und/oder entsprechend genau die Ströme und Spannungen an den Bauelementen erfasst werden.

Insbesondere wird vorgeschlagen, die Schaltverluste zu jedem einzelnen Schaltvorgang zu berechnen. Dabei wurde besonders erkannt, dass solche Schaltvorgänge sehr individuell sein können. Insbesondere zum Erzeugen eines sinusförmigen Stroms ändert sich ständig, also bei jedem Schaltvorgang, die Strom- und Spannungsamplitude.

Besonders bei einem Toleranzbandverfahren wird ohnehin ununterbrochen der Augenblickswert des erzeugten Stroms erfasst, um das Toleranzbandverfahren zu steuern bzw. zu betreiben. Diese Werte können dann auch zur Bestimmung der Schaltverluste verwendet werden. Das wird hiermit vorgeschlagen, um eine möglichst hohe Genauigkeit zu erhalten.

Gemäß einem Aspekt wird vorgeschlagen, dass die Blindleistungsverlustleistung über die Zeit aufintegriert wird, um eine durch Blindleistungseinspeisung bedingte Blindleistungsverlustenergie zu erfassen, oder dass für jede Windenergieanlage einzeln jeweils eine Anlagenblindleistungsverlustleistung ermittelt und über die Zeit zu einer Anlagenblindleistungsverlustenergie aufintegriert wird. Es werden also zwei Varianten vorgeschlagen. Gemäß der ersten Variante wird die Blindleistungsverlustleistung für alle Windenergieanlagen, also für den Windpark, bestimmt und dann zur Blindleistungsverlustenergie aufintegriert. Im zweiten Fall erfolgt das Aufintegrieren in bzw. für jede Windenergieanlage. Erst die so an jeder Windenergieanlage ermittelten Blindleistungsverlustenergiemengen werden aufsummiert. Diese zweite Variante hat besonders den Vorteil, dass jede Windenergieanlage für sich, besonders von den anderen Windenergieanlagen unabhängig, ihre Verlustenergie, also ihre Anlagenblindleistungsverlustenergie, ermitteln kann.

Am Ende des Ermittlungszeitraums braucht die Windenergieanlage dann nur einen Wert auszugeben, der mit entsprechenden Werten aller Windenergieanlagen zur Blindleistungsverlustenergie des Windparks zusammengeführt, insbesondere aufaddiert wird. Die parkweise Aufintegration der Blindleistungsverlustleistung kann dafür den Vorteil haben, dass Parkeinflüsse besser berücksichtigt werden können.

Für die parkweise Bestimmung der Blindleistungsverlustenergie, also für den ersten Fall, wird vorgeschlagen, dass die Gesamtverlustleistung am Netzanschlusspunkt erfasst wird, oder dass Anlagenverlustleistung jeweils an einem Ausgang jeder Windenergieanlage erfasst und zur Erfassung der Gesamtverlustleistung aufaddiert werden. Die Gesamtverlustleistung kann also auf zwei Arten bestimmt werden. Wird die Gesamtverlustleistung am Netzanschlusspunkt erfasst, ist von ihr auch insgesamt eine Wirkleistungsverlustleistung abzuziehen.

Alternativ können Anlagenverlustleistungen jeweils an einem Ausgang jeder Windenergieanlage erfasst werden. In diesem Fall können diese zur Erfassung der Gesamtverlustleistung aufaddiert werden und davon dann die Wirkleistungsverlustleistung abgezogen werden, um die Blindleistungsverlustleistung zu erhalten. Es kommt aber auch in Betracht, dass von den Anlagenverlustleistungen zunächst jeweils eine Anlagenwirkleistungsverlustleistung abgezogen wird, um dadurch für jede Windenergieanlage eine Anlagenblindleistungsverlustleistung zu erhalten. All diese Anlagenblindleistungsverlustleistungen können dann zur Blindleistungsverlustleistung aufsummiert werden, die dann also den gesamten Park betrifft. Diese wird dann zur Blindleistungsverlustenergie aufintegriert.

Wird für jede Windenergieanlage einzeln eine Anlagenblindleistungsverlustleistung ermittelt und über die Zeit zu einer Anlagenblindleistungsverlustenergie aufintegriert, so wird auch hier vorgeschlagen, dass die Anlagenblindleistungsverlustleistung aus einer Differenz zwischen einer Verlustleistung der Windenergieanlage im aktuellen Arbeitspunkt und einer Anlagenreferenzverlustleistung bestimmt wird. Die Anlagenreferenzverlustleistung wird aus einer abgespeicherten Anlagenreferenzverlustleistung abgeleitet oder aus mehreren abgespeicherten Anlagenreferenzverlustleistungen durch Interpolation oder Extrapolation bestimmt. Details dazu wurden oben bereits beschrieben. Die Blindleistungsverlustenergie des Windenergiesystems wird dann als Summe der Anlagenblindleistungsverlustenergien aller Windenergieanlagen gebildet.

Gemäß einem Aspekt wird vorgeschlagen, dass zum Erfassen der Gesamtverlustleistung in dem aktuellen Arbeitspunkt Übertragungsverluste zwischen der wenigstens einen Windenergieanlage und dem Netzanschlusspunkt berücksichtigt werden. Außerdem oder alternativ werden zum Erfassen der Wirkleistungsverlustleistung in dem jeweiligen Referenzarbeitspunkt Übertragungsverluste zwischen der wenigstens einen Windenergieanlage und dem Netzanschlusspunkt berücksichtigt. Zusätzlich oder alternativ werden zum Erfassen einer Anlagenreferenzverlustleistung in dem jeweiligen Referenzanlagenarbeitspunkt jeweils Übertragungsverluste zwischen der Windenergieanlage und dem Netzanschlusspunkt berücksichtigt.

Hier wurde besonders erkannt, dass Übertragungsverluste zwischen der wenigstens einen Windenergieanlage und dem Netzanschlusspunkt relevant sein können. Die Gesamtverlustleistung kann solche Übertragungsverluste beinhalten und auch in dem Referenzarbeitspunkt bzw. den Referenzanlagenarbeitspunkten können solche Übertragungsverluste vorhanden sein. Damit können die Übertragungsverluste auch in der Wirkleistungsverlustleistung enthalten sein. Werden die Übertragungsverluste in der Gesamtverlustleistung und auch in der Wirkleistungsverlustleistung berücksichtigt, können dadurch auch die Übertragungsverluste für die Blindleistungsverlustleistung berücksichtigt werden. Im Grunde ergeben sich aus der Differenz der Übertragungsverluste der Gesamtverlustleistung und der Übertragungsverluste der Wirkleistungsverlustleistung die Übertragungsverluste der Blindleistungsverlustleistung.

Gemäß einem Aspekt wird vorgeschlagen, dass zum Erfassen der Blindleistungsverlustleistung für jede Windenergieanlage in Abhängigkeit von der Wirkleistung des aktuellen Arbeitspunktes und in Abhängigkeit von einer Phasenverschiebung zwischen einer Ausgangsspannung an der Windenergieanlage und einer Spannung an dem Netzanschlusspunkt ein Anlagenreferenzarbeitspunkt bestimmt wird. Dies erfolgt so, dass die Anlagenreferenzarbeitspunkte aller Windenergieanlagen zusammen den Vergleichsarbeitspunkt realisieren. Es wurde also erkannt, dass sich der Vergleichsarbeitspunkt aus den Anlagenreferenzarbeitspunkten aller Windenergieanlagen zusammensetzt, wobei zusätzlich eine Phasenverschiebung zwischen jeder Windenergieanlage und dem Netzanschlusspunkt berücksichtigt wird. Aufgrund der Phasenverschiebung ist also jeweils eine entsprechende Blindleistung involviert. Diese kann an der Windenergieanlage, am Netzanschlusspunkt oder teilweise jeweils an beiden Seiten der Übertragungsverbindung auftreten, kann also am Netzanschlusspunkt und an der jeweiligen Windenergieanlage auftreten. Dies wird für die Wahl der Anlagenreferenzarbeitspunkte berücksichtigt.

Entsprechend wird auch vorgeschlagen bzw. berücksichtigt, dass wenigstens einer der Anlagenarbeitspunkte einen Blindleistungsanteil aufweist. Hier wurde besonders erkannt, dass auch bei den Anlagenreferenzarbeitspunkten, die sich schließlich zu einem Vergleichsarbeitspunkt ohne Blindleistungseinspeisung zusammensetzen sollen, dennoch Blindleistungen auftreten können. Diese Blindleistungen werden im Wesentlichen dazu eingesetzt, einen Blindleistungsbedarf in einem Parknetz zu decken oder zu befriedigen. Dieser Blindleistungsbedarf kann, zumindest teilweise, auch als Blindleistungsbedarf einzelner Leitungen auftreten und kann dadurch einzelne Windenergieanlagen betreffen. Die Windenergieanlagen können in unterschiedlichen Abständen zum Netzanschlusspunkt aufgestellt sein und insbesondere deswegen zu unterschiedlichem Blindleistungsbedarf und damit auch zu unterschiedlichen Phasenverschiebungen jeweils zwischen der Windenergieanlage und dem Netzanschlusspunkt führen. Das soll somit berücksichtigt werden.

Außerdem wird vorgeschlagen, zu jedem Anlagenreferenzarbeitspunkt eine Anlagenreferenzverlustleistung aus einer abgespeicherten Anlagenreferenzverlustleistung zu bestimmen, oder aus mehreren abgespeicherten Anlagenreferenzverlustleistungen durch Interpolation oder Extrapolation zu bestimmen. Details dazu wurden weiter oben bereits ausgeführt.

Zusätzlich wird vorgeschlagen, dass die Blindleistungsverlustleistung des Windenergiesystems bestimmt wird aus einer Gesamtverlustleistung des aktuellen Arbeitspunktes, abzüglich einer Summe der Anlagenreferenzverlustleistungen, und zuzüglich aktueller Übertragungsverluste, die in dem aktuellen Arbeitspunkt durch die Übertragung des Blindleistungsanteils von den Windenergieanlagen zum Netzanschlusspunkt entstehen. Es werden somit aktuelle Übertragungsverluste berücksichtigt, die konkret nur der Übertragung des Blindleistungsanteils zugeordnet werden. Hier wurde besonders berücksichtigt, dass eine solche isolierte Zuordnung von Übertragungsverlusten zu einem Anteil der übertragenen Leistung mit guter Näherung möglich ist. Die Übertragungsverluste werden im Wesentlichen durch die Leistungsübertragung als solche hervorgerufen. Sie werden also im Wesentlichen durch einen sinusförmigen Stromanteil hervorgerufen, der hier übertragen wird.

Zur Berücksichtigung kann hier auch die Phasenverschiebung zwischen Windenergieanlage und Netzanschlusspunkt berücksichtigt werden.

Vorzugsweise wird vorgeschlagen, dass die aktuellen Übertragungsverluste durch eine Lastflussberechnung oder aus einer Tabelle ermittelt werden. Durch eine solche Lastflussberechnung können die elektrischen Eigenschaften der Übertragungsleitung bzw. ganz allgemein der Übertragungsinfrastruktur zwischen den Windenergieanlagen und dem Netzanschlusspunkt berücksichtigt werden. Besonders wird dies für einen Windpark mit mehreren Windenergieanlagen vorgeschlagen und die Lastflussberechnung kann dabei die Überlagerung durch die Übertragung der einzelnen Windenergieanlagen an entsprechenden Knoten in einem Parknetz berücksichtigen.

Zur Lastflussberechnung kann auch ein entsprechendes Modell des Parknetzes verwendet werden, das beispielsweise vorab erstellt werden kann oder das aufgrund der bekannten physikalischen Gegebenheiten bestimmt werden kann. Zu den physikalischen Gegebenheiten gehören besonders die Topologie des Parknetzes bestehend aus Übertragungsleitungen und Verbindungsknoten und dazu den jeweiligen physikalischen Eigenschaften der verwendeten Leitungen wie Querschnitt und Länge. Die Leitungen können auch einfach nur als entsprechende Impedanzen berücksichtigt werden. Diese Impedanzen sind aus den physikalischen Eigenschaften ableitbar oder können gemessen werden.

Aus Vorabuntersuchungen können aber auch, als Alternative, Tabellen bestimmt werden. Solche Tabellen geben für die jeweiligen Windenergieanlagen je nach Arbeitspunkt, also je nach Wirk- und Blindleistung, Übertragungsverluste an. Die Tabellen können so erstellt sein, dass sie nur die Übertragungsverluste angeben, die durch den Blindleistungsanteil hervorgerufen sind.

Hier ist zu berücksichtigen, dass auch in Betracht kommt, dass in einem Referenzarbeitspunkt weniger Blindleistung übertragen wird als in dem aktuellen Arbeitspunkt. Das kann für einzelne Windenergieanlagen gelten, die beispielsweise weit von dem Netzanschlusspunkt angeordnet sind und bei denen sich somit eine große Phasenverschiebung zwischen Windenergieanlage und Netzanschlusspunkt ergibt. In dem Anlagenreferenzarbeitspunkt wird dann viel Blindleistung von der Windenergieanlage abgegeben, um nämlich den Blindleistungsbedarf der Übertragung zum Netzanschlusspunkt zu erfüllen. In dem aktuellen Arbeitspunkt kommt dann in Betracht, dass diese Windenergieanlage weniger Blindleistung einspeist, weil die Phasenverschiebung auf dem Übertragungsabschnitt von dieser Windenergieanlage zum Netzanschlusspunkt zu einer Blindleistung am Netzanschlusspunkt führt.

Es kann in einem Windpark also für wenigstens eine einzelne Windenergieanlage die Situation entstehen, dass bei einer reinen Wirkleistungseinspeisung diese wenigstens eine einzelne Windenergieanlage aber mehr Blindleistung erzeugt als in einem aktuellen Arbeitspunkt, in den der Windpark Wirkleistung und Blindleistung einspeist. Diese wenigstens eine einzelne Windenergieanlage wird dann möglicherweise auch eine größere Verlustleistung haben, wenn der Park reine Wirkleistung einspeist, im Vergleich zu dem aktuellen Arbeitspunkt, der auch Blindleistung einspeist.

Bei der vorgeschlagenen Berücksichtigung der Phasenverschiebung wird somit auch berücksichtigt, wie viel Blindleistung die Windenergieanlage dann jeweils in ihrem Anlagenreferenzarbeitspunkt erzeugt und der beschriebene Effekt würde berücksichtigt werden. Für die einzelne Windenergieanlage könnte sich dabei also eine geringere Verlustleistung bei dem aktuellen Arbeitspunkt als bei dem Vergleichsarbeitspunkt ergeben. An dieser Windenergieanlage wäre die Verlustleistung, die sich in dem aktuellen Arbeitspunkt ergibt, im Vergleich zum Vergleichsarbeitspunkt negativ. Es kommt auch in Betracht, dass sich dieses Phänomen nicht nur für eine einzelne Windenergieanlage einstellt, sondern dass in dem aktuellen Arbeitspunkt insgesamt weniger Verlustleistung auftritt als in dem Vergleichsarbeitspunkt.

Außerdem oder alternativ wird vorgeschlagen, dass zur Berechnung der Blindleistungsverlustleistung Referenzübertragungsverluste abgezogen werden, die eine Summe bilden von Übertragungsverlusten, die jeweils durch eine Übertragung eines Blindleistungsanteils in einem Anlagenreferenzarbeitspunkt von der jeweiligen Windenergieanlage zum Netzanschlusspunkt entstehen können. Hier wird also zusätzlich vorgeschlagen, die Blindleistung, die in einem Anlagenreferenzarbeitspunkt jeweils auftreten kann, nicht nur hinsichtlich Verlustleistungen in der Windenergieanlage zu betrachten, sondern auch hinsichtlich ihrer Übertragung von der Windenergieanlage zum Netzanschlusspunkt.

Das sind somit Übertragungsverluste, die durch die Blindleistungsübertragung in einem Parknetz hervorgerufen werden, aber nur durch die Blindleistung, die in dem jeweiligen Anlagenreferenzarbeitspunkt entsteht, die also in dem Vergleichsarbeitspunkt zusätzlich noch auftreten kann. In dem Vergleichsarbeitspunkt wird also keine Blindleistung eingespeist, sie kann aber innerhalb des Windparks auftreten und dabei auch zu Übertragungsverlusten führen und genau diese Übertragungsverluste werden hier herausgerechnet.

Gemäß einem Aspekt wird vorgeschlagen, dass die Voruntersuchungen sukzessive wiederholt werden, um nach und nach mehr Referenzwerte aufzunehmen und abzuspeichern, wobei insbesondere die Voruntersuchungen im laufenden Betrieb durchgeführt werden, wenn Arbeitspunkte auftreten, bei denen keine Blindleistung eingespeist wird, und/oder die Voruntersuchungen im laufenden Betrieb durchgeführt werden, und Arbeitspunkte temporär so verändert werden, dass keine Blindleistung eingespeist wird.

Durch das Aufnehmen von Voruntersuchungen im laufenden Betrieb kann somit die Windenergieanlage bzw. der Windpark ganz normal betrieben werden und währenddessen kann eine Datentabelle nach und nach gefüllt werden. Das ist besonders dann ohne Weiteres möglich, wenn häufig nur Wirkleistung eingespeist wird. Dann bilden solche normalen Arbeitspunkte nämlich potentielle Vergleichsarbeitspunkte. Die einzelnen Windenergieanlagen werden dann jeweils in einem Anlagenreferenzarbeitspunkt betrieben und dann können die entsprechenden Referenzwerte aufgenommen werden.

Sollte sich herausstellen, dass zum Beispiel bei einigen Wirkleistungskonstellationen regelmäßig Blindleistung eingespeist wird und daher dafür selten potentielle Vergleichsarbeitspunkte in diesem Bereich auftreten, so kann temporär, insbesondere für weniger als eine halbe Stunde, insbesondere für weniger als zehn Minuten, der Arbeitspunkt temporär so verändert werden, dass keine Blindleistung eingespeist wird. Hier ist besonders auch zu berücksichtigen, dass die Anforderung, eine Blindleistung einzuspeisen, häufig an viele Windparks gegeben wird. Wenn nach und nach von all diesen Windparks einer temporär seinen Arbeitspunkt so verändert, dass er keine Blindleistung einspeist, so kann das hinnehmbar sein bzw. kann durch die übrigen Windparks kompensiert werden, indem diese etwas mehr Blindleistung einspeisen.

Erfindungsgemäß wird auch ein Windenergiesystem mit wenigstens einer Windenergieanlage zum Einspeisen elektrischer Leistung in einen Netzanschlusspunkt in ein elektrisches Versorgungsnetz vorgeschlagen. Ein solches Windenergiesystem kann somit eine Einzelwindenergieanlage sein, insbesondere betrifft sie aber einen Windpark mit mehreren Windenergieanlagen, die an demselben Netzanschlusspunkt in das elektrische Versorgungsnetz einspeisen. Sofern nachfolgend oder vorstehend Aspekte für mehrere Windenergieanlagen beschrieben wurden oder werden, so betrifft dies einen solchen Windpark.

Das Windenergiesystem ist dazu vorbereitet,

- in einem aktuellen Arbeitspunkt des Windenergiesystems, elektrische Leistung in das elektrische Versorgungsnetz mit einem Wirkleistungsanteil und einem Blindleistungsanteil einzuspeisen, und

folgende Schritte durchzuführen:

- Erfassen einer durch das Einspeisen der elektrischen Leistung in dem aktuellen Arbeitspunkt verursachten Gesamtverlustleistung, und

- Schätzen einer durch das Einspeisen des Blindleistungsanteils in dem aktuellen Arbeitspunkt verursachten Blindleistungsverlustleistung wobei

- die Blindleistungsverlustleistung aus einer Differenz zwischen der Gesamtverlustleistung und einer dem aktuellen Arbeitspunkt zugeordneten Wirkleistungsverlustleistung bestimmt wird, wobei

- die Wirkleistungsverlustleistung einer Verlustleistung eines Vergleichsarbeitspunktes entspricht, in dem

- gleich viel Wirkleistung wie im aktuellen Arbeitspunkt eingespeist wird, aber

- keine Blindleistung eingespeist wird.

Das Windenergiesystem kann zum Ausführen dieses Verfahrens und der genannten Schritte dadurch dazu vorbereitet sein, dass ein entsprechendes Verfahren mit den Schritten in einer Steuereinrichtung des Windenergiesystems implementiert ist. Daraus kann in einem Prozessrechner ein entsprechendes Steuerprogramm implementiert sein und auf die wenigstens eine Windenergieanlage zugreifen. Bei einem Windpark kann die Steuerungseinrichtung insbesondere eine zentrale Steuerungseinrichtung des Windparks bilden, die somit auch als zentrale Parkregelung bezeichnet werden kann. Diese Steuerungseinrichtung oder zentrale Steuerungseinrichtung kann dann auf sämtliche Windenergieanlagen zugreifen, indem sie zumindest Werte übertragen und empfangen kann, wie Steuerwerte und Messwerte.

Insbesondere ist das Windenergiesystem, insbesondere der Windpark, dazu vorbereitet, ein Verfahren gemäß wenigstens einer vorstehend beschriebenen Ausführungsform durchzuführen. Insbesondere kann dafür das betreffende Verfahren auf der Steuerungseinrichtung implementiert sein.

Nachfolgend wird die Erfindung anhand von Ausführungsformen unter Bezugnahme auf die begleitenden Figuren beispielhaft näher erläutert:

Figur 1    zeigt eine Windenergieanlage in einer perspektivischen Darstellung.

Figur 2    zeigt einen Windpark in einer schematischen Darstellung.

Figur 3    zeigt ein erweitertes Ablaufdiagramm zum Erläutern eines Verfahrens.

Figur 4    zeigt Elemente eines Windenergiesystems, an denen Verlustleistungen auftreten können, in einer schematischen Darstellung.

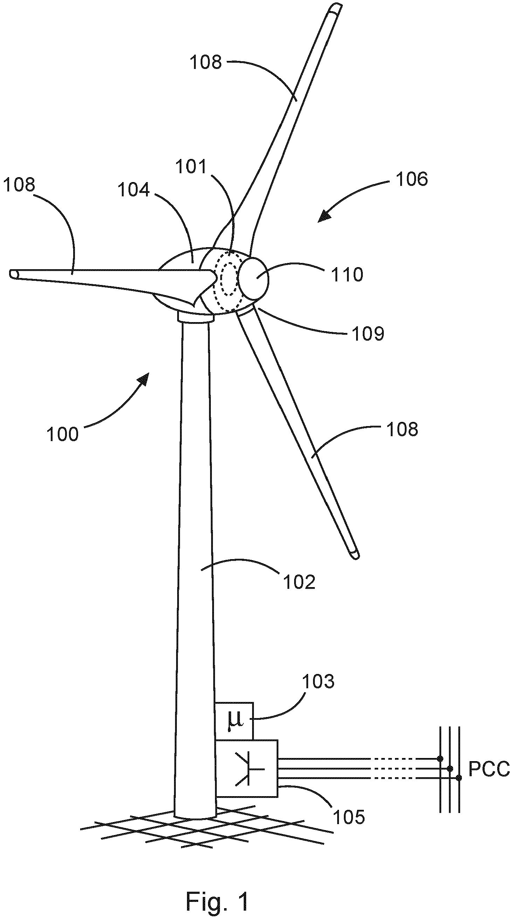

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

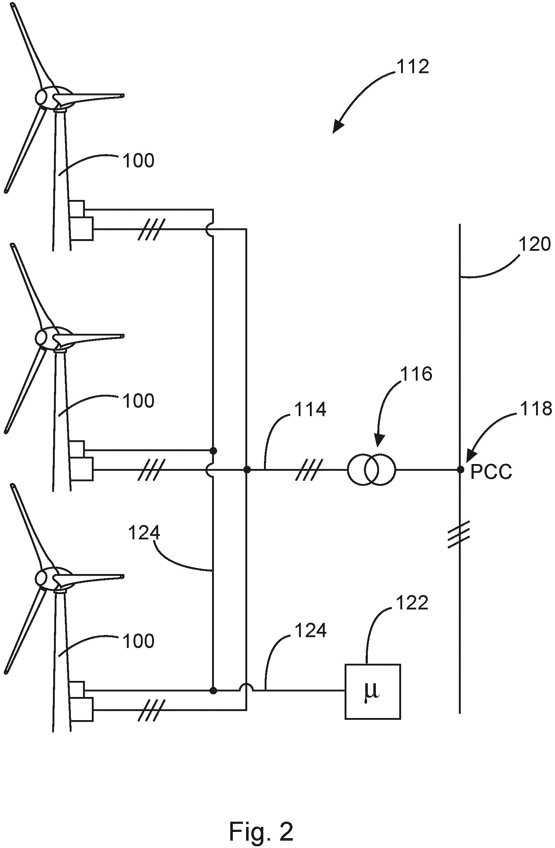

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der eine Steuerungseinrichtung aufweisen kann, oder die Steuerungseinrichtung bilden kann. Dieser Parkrechner bzw. die Steuerungseinrichtung kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

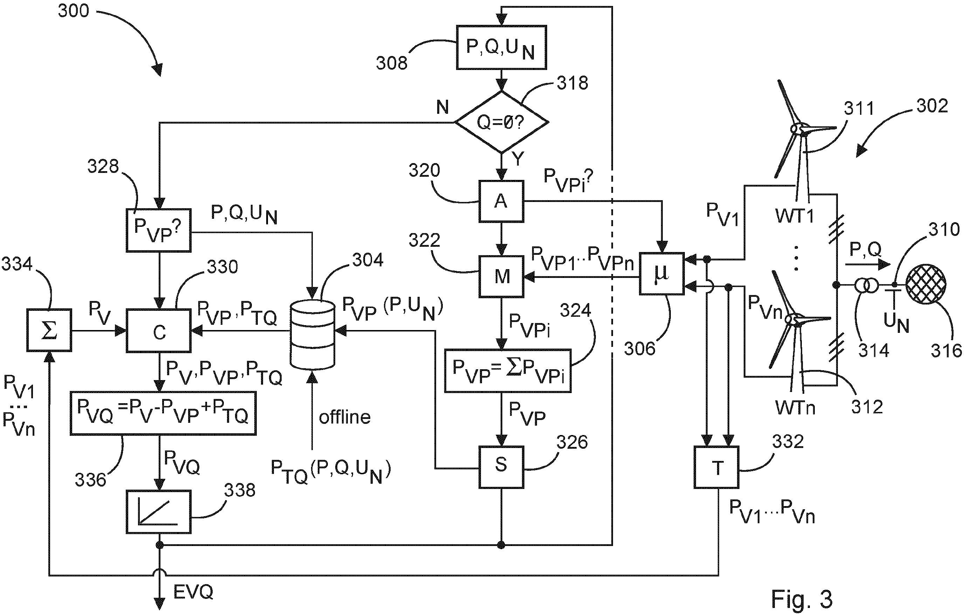

Figur 3 zeigt ein erweitertes Ablaufdiagramm 300. Dieses erweiterte Ablaufdiagramm 300 zeigt ein Ablaufschema kombiniert mit funktionalen Elementen, einschließlich Elementen eines Windenergiesystems 302, und einen Datenspeicher 304, der Teil des Windenergiesystems 302 sein kann und auch einen Prozessrechner beinhalten kann. Das Windenergiesystem 302 weist eine Steuereinrichtung 306 auf, die ebenfalls symbolisch zu verstehen ist. Der Datenspeicher 304 kann Teil der Steuereinrichtung 306 sein. Im Übrigen kann auch der gesamte in Figur 3 veranschaulichte Ablauf in der Steuereinrichtung 306 implementiert sein.

Das Ablaufdiagramm beginnt mit einem Startblock 308, an dem der Ablauf starten kann. Im Grunde zeigt das Ablaufdiagramm 300 aber einen Ablauf, der ununterbrochen fortlaufen kann. Der Startblock 308 symbolisiert, dass das Windenergiesystem in einem Arbeitspunkt betrieben wird. Dieser Arbeitspunkt ist durch die eingespeiste Wirkleistung P und die eingespeiste Blindleistung Q gekennzeichnet, sowie durch die vorhandene Netzspannung $U_N$, die am Netzverknüpfungspunkt 310 erfasst werden kann, oder auch an einer der Windenergieanlagen 311 oder 312. Die Windenergieanlagen 311 und 312, die repräsentativ für weitere Windenergieanlagen in dem Windenergiesystem 302 stehen, speisen hier exemplarisch über einen Netztransformator 314 in das elektrische Versorgungsnetz 316 ein. Erfolgt die Spannungsmessung an wenigstens einer der Windenergieanlagen 311 oder 312, so kann sie natürlich entsprechend dem Übertragungsverhältnis des Netztransformators 314 umgerechnet werden. Der Netzverknüpfungspunkt 310 kann synonym auch als Netzanschlusspunkt bezeichnet werden.

Die eingespeiste Wirkleistung P, eingespeiste Blindleistung Q und die vorhandene Netzspannung $U_N$ sind somit bekannt und für den Ablauf der Figur 3 von Bedeutung, weil sie den aktuellen Arbeitspunkt kennzeichnen. Deswegen sind sie in dem Startblock 308 dargestellt.

Die eingespeiste Blindleistung Q kann auch den Wert null aufweisen. Es wird dann also keine Blindleistung eingespeist. Genau das wird in dem Abfrageblock 318 abgefragt.

Wird im Abfrageblock 318 festgestellt, dass die eingespeiste Blindleistung null beträgt, besteht die Möglichkeit, Verlustleistungen für diesen Fall der reinen Wirkleistungseinspeisung aufzunehmen. Daher verzweigt der Abfrageblock 318 dann zum Anforderungsblock 320. Dieser Anforderungsblock 320 sendet dann ein Anforderungssignal an die Steuereinrichtung 306. In diesem Anfragesignal wird an die Steuereinrichtung 306 die Anfrage gesendet, dass die aktuellen Verlustleistungen der Windenergieanlagen 311 bis 312 erfasst werden sollen.

Da nun ein Fall reiner Wirkleistungseinspeisung vorliegt, werden somit im Wesentlichen Anlagenverlustleistungen bei Wirkleistungseinspeisung benötigt, die hier als $P_{VPi}$ gekennzeichnet sind. Der Index i steht repräsentativ für die jeweils zugehörige Windenergieanlage. Der Index i kann von 1 bis n variieren und somit die erste bis n-te Windenergieanlage betreffen. Es können auch Blindleistungen an den einzelnen Windenergieanlagen vorliegen, was hier aber der besseren Übersichtlichkeit halber vernachlässigt wird bzw. in die Anlagenverlustleistung $P_{VPi}$ einfließen kann.

Jedenfalls führt diese Anfrage dazu, dass die Steuereinrichtung 306 von jeder der Windenergieanlagen 311 bis 312 die in dem Moment aktuell erfassten Anlagenverlustleistungen $P_{V1}$ bis $P_{Vn}$ erfasst. Der Index P soll andeuten, dass die jeweilige Verlustleistung zu einem Arbeitspunkt bei Wirkleistungseinspeisung gehört. Aus Sicht jeder Windenergieanlage kann aber vorgesehen sein, die jeweilige Verlustleistung unabhängig davon zu erfassen, ob gerade ein Wirkleistungsarbeitspunkt vorliegt oder nicht. Daher sind die Verlustleistungen, die die Steuereinrichtung 306 von den Windenergieanlagen 311 und 312 empfängt, nur als $P_{V1}$ bzw. $P_{Vn}$ gekennzeichnet.

Die Steuereinrichtung 306 kann die so empfangenen Daten dann weitergeben, was aber nur in dem Falle gemacht werden soll, wenn ein Arbeitspunkt reiner Wirkleistungseinspeisung vorliegt. Daher überträgt die Steuereinrichtung 306 die einzelnen Anlagenwirkleistungsverlustleistungen $P_{VP1}$ bis $P_{VPn}$ an den Messblock 322. Dieser Messblock 322 gibt dann diese einzelnen Anlagenwirkleistungsverlustleistungen $P_{VPi}$ an den ersten Berechnungsblock 324. In diesem ersten Berechnungsblock 324 wird aus den einzelnen Anlagenwirkleistungsverlustleistungen $P_{VPi}$ durch Summenbildung die Wirkleistungsverlustleistung $P_{VP}$ berechnet. Die Wirkleistungsverlustleistung ist somit die Summe aller Anlagenwirkleistungsverlustleistungen und entspricht somit der Wirkleistungsverlustleistung eines Vergleichsarbeitspunktes, in dem keine Blindleistung eingespeist wird.

Diese Wirkleistungsverlustleistung $P_{VP}$ wird dann an den Speicherblock 326 gegeben. Der Speicherblock 326 steht in dem Ablauf für das Abspeichern dieser Wirkleistungsverlustleistung für den zugehörigen Referenzarbeitspunkt. Der bis jetzt geschilderte Ablauf betrifft nämlich die Erfassung dieser Wirkleistungsverlustleistung eines Referenzarbeitspunktes, der durch die eingespeiste Wirkleistung P und die in dem Moment anliegende Netzspannung $U_N$ gekennzeichnet ist. Entsprechend wird die so erfasste Wirkleistungsverlustleistung $P_{VP}$ zusammen bzw. in Abhängigkeit von der Wirkleistung P und der anliegenden Netzspannung $U_N$ an den Datenspeicher 305 gegeben und dort abgespeichert. Damit ist im Grunde der Ablauf, wenn keine Blindleistung eingespeist wird, wenn also Q = 0 in dem Abfrageblock 318 erkannt wurde, abgeschlossen. Der Ablauf kann zurück zum Startblock 308 führen.

Besonders durch Schwankungen der Windgeschwindigkeit oder auch der Netzspannung aus $U_N$ kann sich der aktuelle Arbeitspunkt ändern und dann kann die geschilderte Schleife erneut durchlaufen werden, falls dann immer noch keine Blindleistung eingespeist wird. Auf diese Art und Weise ergibt sich dann ein neuer Wert für eine Wirkleistungsverlustleistung $P_{VP}$ für einen geänderten Arbeitspunkt, der durch eingespeiste Wirkleistung P und die anliegende Netzspannung $U_N$ gekennzeichnet ist. Entsprechend wird ein solcher geänderter weiterer Wert in den Datenspeicher 304 eingegeben. So kann eine Datenbank vieler Werte der Wirkleistungsverlustleistung für unterschiedliche Arbeitspunkte aufgebaut werden.

Wird nun eine solche Wirkleistungsverlustleistung für einen Vergleichsarbeitspunkt benötigt, kann in Abhängigkeit von der Wirkleistung P und der Netzspannung $U_N$ ein dazu abgespeicherter Wert der zugehörigen Wirkleistungsverlustleistung aus dem Datenspeicher 304 abgerufen werden. Findet sich der so gekennzeichnete Arbeitspunkt nicht exakt, kann ein Arbeitspunkt verwendet werden, der in der Nähe liegt. Der Wert für die Wirkleistungsverlustleistung dieses nur in der Nähe liegenden Arbeitspunktes kann entsprechend angepasst werden. Es kommt auch in Betracht, dass zwischen Werten der Wirkleistungsverlustleistung mehrerer abgespeicherter Arbeitspunkte interpoliert wird, oder auch extrapoliert wird.

Wenn nun das Einspeisen einer Blindleistung abgefragt bzw. angefordert wird, so führt dies dazu, dass in dem Abfrageblock 318 die eingespeiste Blindleistung nicht null ist und somit der Abfrageblock 318 nach N (NEIN) verzweigt und damit zum Abrufblock 328 führt. In dem Abrufblock 328 wird initiiert, dass eine abgespeicherte Wirkleistungsverlustleistung abgerufen wird bzw. aus abgespeicherten Wirkleistungsverlustleistungen eine möglichst passende Wirkleistungsverlustleistung bestimmt wird.

Es wurde aber auch erkannt, dass Übertragungsverluste durch das Einspeisen von Blindleistung auftreten können. Solche Übertragungsverluste können von der eingespeisten Wirkleistung, der eingespeisten Blindleistung und der in dem Moment vorhandenen Netzspannung $U_N$ abhängen. Solche der Blindleistungsübertragung zugeordneten Blindleistungsübertragungsverluste werden hier als $P_{TQ}$ bezeichnet. Sie können in einer Lastflussrechnung ermittelt werden und/oder als Tabellen hinterlegt sein. Die hinterlegten Tabellen können also auch das Ergebnis einer Lastflussrechnung sein oder anderweitig erstellt worden sein, zum Beispiel durch Simulationen.

Hier wird davon ausgegangen, dass die Blindleistungsübertragungsverluste $P_{TQ}$ als Tabellen hinterlegt sind, nämlich in Abhängigkeit von dem entsprechenden Arbeitspunkt, der durch die eingespeiste Wirkleistung P, die eingespeiste Blindleistung Q und die zugehörige Netzspannung $U_N$ gekennzeichnet ist. Entsprechend wird diese Blindleistungsverlustleistung $P_{TQ}$ in Abhängigkeit von diesen drei den entsprechenden Arbeitspunkt kennzeichnenden Größen zum Abspeichern in den Datenspeicher 304 gegeben. Dies kann einmalig erfolgen, was in Figur 3 durch den Begriff "offline" angedeutet wird.

Es ist daher wünschenswert für den aktuellen Arbeitspunkt, bei dem Blindleistung eingespeist wird, und für den die Blindleistungsverlustleistung bestimmt werden soll, neben der abgespeicherten Wirkleistungsverlustleistung aus dem Datenspeicher 304 auch die Blindleistungsübertragungsverluste $P_{TQ}$ abzurufen. Daher übergibt der Abrufblock 328 neben der eingespeisten Wirkleistung P und der aktuellen Netzspannung $U_N$ auch die eingespeiste Blindleistung Q.

Mit diesen drei Eingangswerten kann dann der Datenspeicher, der auch über eine entsprechende Recheneinheit bzw. Prozessrechner verfügen kann, die passende Wirkleistungsverlustleistung $P_{VP}$ und die Blindleistungsübertragungsverluste $P_{TQ}$ ausgeben und an den Sammelblock 330 übertragen.

Um die Verlustleistung zu berechnen, die nur dem Blindleistungsanteil des aktuellen Arbeitspunktes zugeordnet ist, wird außerdem noch die Gesamtverlustleistung Pv benötigt. Sie kann für den gesamten Windpark bzw. das gesamte Windenergiesystem 302 am Netzanschlusspunkt 310 erfasst werden, oder es kommt in Betracht, sie aus den einzelnen Anlagenverlustleistungen $P_{V1}$ bis $P_{Vn}$ zu berechnen. Der besseren Übersichtlichkeit halber wird hier diese zweite Variante gewählt, wobei ebenfalls zur besseren Übersichtlichkeit etwaige Leistungsverluste vernachlässigt werden. Somit werden die Anlagenverlustleistungen $P_{V1}$ bis $P_{Vn}$ an den Kombinierungsblock 332 gegeben und kombiniert zu dem Summenblock 334 übertragen. Der Summenblock 334 berechnet dann durch Summenbildung die Gesamtverlustleistung Pv, die ebenfalls in den Sammelblock 330 eingegeben wird.

Der Sammelblock 330 übergibt dann die so gesammelten Informationen, nämlich die Gesamtverlustleistung Pv, die Wirkleistungsverlustleistung $P_{VP}$ und die Blindleistungsübertragungsverluste $P_{TQ}$ an den zweiten Berechnungsblock 336. In dem zweiten Berechnungsblock 336 kann dann die Blindleistungsverlustleistung $P_{VQ}$ berechnet werden, nämlich nach der Formel:

$$P_{VQ} = P_V - P_{VP} + P_{TQ}$$

Der zweite Berechnungsblock 336 gibt somit die Blindleistungsverlustleistung $P_{VQ}$ aus. Sie kann noch über den Integratorblock 338 gegeben werden, um aus der Blindleistungsverlustleistung $P_{VQ}$ die Blindleistungsverlustenergie $E_{VQ}$ zu berechnen, die somit aus diesem Integratorblock 338 ausgegeben wird.

Der Integratorblock 338 bildet somit auch das Ende dieses Teils des Ablaufs, bei dem für einen aktuellen Arbeitspunkt, bei dem Blindleistung eingespeist wird, die Blindleistungsverlustleistung $P_{VQ}$ bzw. die Blindleistungsverlustenergie $E_{VQ}$ berechnet wird. Diese Schleife kehrt dann ebenfalls zurück zum Startblock 308 und der Ablauf kann dann von vorne beginnen. Auch wenn Blindleistung eingespeist wird, Q also nicht null ist in dem Abfrageblock 318, kann sich aber der Arbeitspunkt geändert haben und ein erneutes Berechnen einer Blindleistungsverlustleistung erforderlich machen.

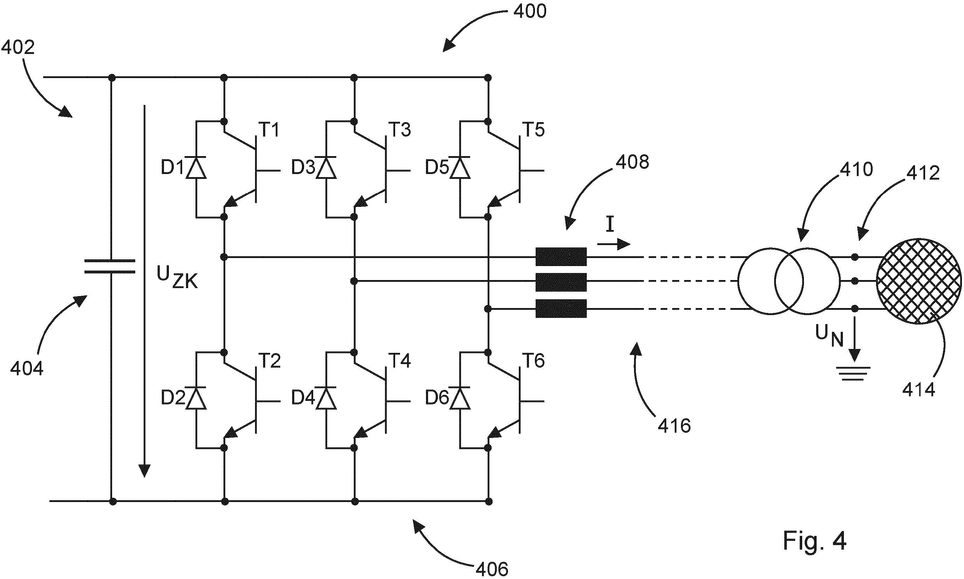

Figur 4 zeigt schematisch einen Teil eines Wechselrichters 400, der Teil einer Einspeiseeinrichtung einer Windenergieanlage sein kann. Der Wechselrichter 400 weist einen Gleichspannungszwischenkreis 402 auf, zu dem ein Zwischenkreiskondensator 404 dargestellt ist. An dem Gleichspannungszwischenkreis 402 und damit an dem Zwischenkreiskondensator 404 fällt eine Zwischenkreisspannung $U_{ZK}$ ab.

Ansonsten ist eine sogenannte B6-Brücke 406 dargestellt, mit sechs Transistoren T1 bis T6 sowie sechs zugehörigen Freilaufdioden D1 bis D6.

Diese B6-Brücke erzeugt durch ein entsprechendes Modulationsverfahren auch unter Zuhilfenahme der Ausgangsdrossel 408 einen dreiphasigen etwa sinusförmigen Strom I. Dieser kann dann, gegebenenfalls nach Transformation über einen Transformator 410, an dem Netzanschlusspunkt 412 in das elektrische Versorgungsnetz 414 eingespeist werden. An dem Netzanschlusspunkt 412 liegt eine Netzspannung $U_N$ an, die hier ebenfalls symbolisch als Spannung gegen Erde eingezeichnet ist. Es kann aber auch eine Leiter-Leiter-Spannung verwendet werden. Jedenfalls kann diese Netzspannung $U_N$ den Arbeitspunkt mit bestimmen. An dem Netzanschlusspunkt 412 können auch weitere Leistungen, also von weiteren Windenergieanlagen, also von weiteren Wechselrichtern als nur von dem Wechselrichter 400, eingespeist werden.

Die Übertragungsleitung 416 ermöglicht somit eine Übertragung des einzuspeisenden Stroms I von der Ausgangsdrossel 408 zum Transformator 410. Die Übertragungsleitung 416 ist teilweise gestrichelt dargestellt, um zu symbolisieren, dass hier eine große Entfernung vorliegen kann, die Übertragungsleitung also sehr lang sein kann. Die Übertragungsleitung kann dabei ein induktives Verhalten oder auch ein kapazitives Verhalten, je nachdem, wie die Leitung ausgebildet ist, aufweisen. Dadurch können sich Phasenverschiebungen zwischen der Ausgangsdrossel 408 und dem Transformator 410 bzw. damit auch dem Netzanschlusspunkt 412 ergeben. Entsprechend ergeben sich also Phasenverschiebungen zwischen einem Ausgang einer Windenergieanlage und einem bzw. dem Netzanschlusspunkt 412.

Verlustleistungen der Windenergieanlage können sich besonders an dem gezeigten Wechselrichter 400 bzw. dem dargestellten Abschnitt ergeben, teilweise auch an der gezeigten Ausgangsdrossel 408. Besonders können sich an jedem der Transistoren T1 bis T6 jeweils einzelne Verlustleistungen ergeben. Ebenfalls können sich an jeder der Diode D1 bis D6 Verlustleistungen ergeben. Auch an jedem Schenkel der drei Phasen der Ausgangsdrossel 408 können sich Verlustleistungen ergeben. All diese Verlustleistungen, also insbesondere all diese 15 einzelnen Verlustleistungen, können zusammenaddiert werden und eine Anlagenverlustleistung $P_{Vi}$ ergeben.

Wenn die Windenergieanlage, was üblich ist, mehrere Wechselrichter, wie den Wechselrichter 400, aufweisen, sind diese Verlustleistungen jedes dieser Wechselrichter zusammenzuaddieren. Es können auch weitere Verlustleistungen hinzukommen, die genannten dürften aber in aller Regel die wesentlichsten Verlustleistungen sein. Verlustleistungen können auch generatorseitig auftreten, die sind hier aber nicht erwähnt, weil sie sich nur mit der erzeugten Wirkleistung ändern, nicht mit der eingespeisten Blindleistung. Hier kommen allenfalls geringe Auswirkungen dadurch in Betracht, dass möglicherweise durch die Blindleistungseinspeisung die Zwischenkreisspannung etwas verändert werden muss, was auch generatorseitig einen Einfluss haben kann. Im Einzelfall kann entschieden werden, ob solche Verluste vernachlässigbar sind.

Es kann sinnvoll sein, einige Informationen, wie die Zwischenkreisspannung $U_{ZK}$ oder auch eine Schaltfrequenz, mit der die B6-Brücke 406 angesteuert wird, zu berücksichtigen und beispielsweise in einer Tabelle zu hinterlegen. Es kommt nämlich dann in Betracht, dass eine konkrete Verlustleistung in jedem dieser genannten Bauteile nicht erneut gemessen werden muss, wenn sich ein bereits vermessener Arbeitspunkt einstellt. Ein solcher Arbeitspunkt kann durch die Zwischenkreisspannung $U_{ZK}$, die Schaltfrequenz und gegebenenfalls eine Außentemperatur gekennzeichnet sein. Natürlich kennzeichnet ihn auch die Höhe der eingespeisten Wirkleistung oder Scheinleistung oder des eingespeisten Stroms.

Auf der Übertragungsleitung 416 kann sich auch durch Blindleistungseinspeisung eine dieser Blindleistung zugeordnete Verlustleistung ergeben. Diese kann ebenfalls erfasst werden und diese kann insbesondere separat ausgegeben werden. Zumindest kann sie von einer Phasenverschiebung zwischen der Ausgangsdrossel 408 und dem Transformator 410 bzw. dem Netzanschlusspunkt 412 abhängen und abhängig davon bestimmt werden. Diese Bestimmung kann auch an anderer Stelle durchgeführt werden.

Es wird somit eine Lösung vorgeschlagen, mit der besonders das Erfassen der tatsächlichen Verluste in den Leistungsschränken, das Ermitteln des blindleistungsbedingten Anteils und das Aufintegrieren der zusätzlichen Verlustenergiemenge durch eine Blindleistungsbereitstellung erreicht werden kann.

Ein Ziel ist es zudem, über ein lernendes Verfahren die minimalen Verluste bei einer reinen Wirkleistungseinspeisung (entweder am Netzverknüpfungspunkt (NVP) oder an den Anlagenklemmen) zu erfassen und basierend auf den absoluten momentanen Verlusten und den gespeicherten minimalen Verlusten die zusätzlichen Verluste durch den aktuellen Blindleistungsarbeitspunkt zu bestimmen.

Besonders vorgeschlagen wird das Erfassen der tatsächlichen Halbleiterverluste über ein Online-Verlustmodell auf Anlagenebene, also in oder für jede Windenergieanlage. Es sollten möglichst alle Randbedingungen erfasst werden. Dazu gehören die Spannung am Netz, die Spannung im Zwischenkreis (Zwischenkreisspannung), Temperatur von Kühlwasser und Halbleiterschichten.

Das Erfassen oder Messen von Verlusten wird vorgeschlagen, nämlich eine Berechnung von Durchlassverlusten von Halbleitern, und auch von Drosseln und weitere Komponenten. Besonders wird das Berechnen der Schaltverluste bei jedem Schaltvorgang vorgeschlagen, nämlich an IGBTs und Dioden der Umrichter.

Weiter wird das Erfassen des Arbeitspunktes (Wirk- und Blindstrom, Netzspannung) vorgeschlagen, und das Erfassen und Speichern der Verluste (Referenzverluste) bei einer reinen Wirkleistungsbereitstellung (entweder am Netzverknüpfungspunkt (NVP) oder am Ausgang jeder Windenergieanlage, also den WEA-Klemmen.

Als weiterer Schritt wird das Erfassen der absoluten Verluste bei einer Bereitstellung von Wirk- und Blindleistung und Subtraktion der Referenzverluste bei dem Wirkleistungsarbeitspunkt zur Bestimmung der blindleistungsbedingten Verluste vorgeschlagen. Darauf kann dann die Integration der blindleistungsbedingten Gesamtverluste über die Zeit erfolgen.

Als besonderer Zusatzaspekt wird eine Blindleistungserfassung auf Parkebene vorgeschlagen. Wenn die Referenzverluste bei Q=0 am Netzverknüpfungspunkt (NVP) bestimmt werden, dann bildet die Referenz der Arbeitspunkte an den Umrichterklemmen eine Verschiebungskurve, demnach sich gegenüber dem Netzverknüpfungspunkt Abweichungen der Blindleistung an jeder Windenergieanlage ergeben können, die vom Ort der Windenergieanlage und der übertragenen Wirkleistung abhängen können. Es treten somit Verschiebungen aufgrund der Parkimpedanz auf. Die momentanen Verluste gegenüber der Referenz auf der Ebene der Windenergieanlagen (WEA-Ebene) können somit auch negativ sein.

Dazu wurde aber auch erkannt, dass es sinnvoll sein kann, blindleistungsbedingte Verluste im Parknetz zu berücksichtigen. Eine solche Berücksichtigung kann über eine Tabelle (Look-Up Table) erfolgen. Eine solche Tabelle kann für jede Windenergieanlage, oder für den Windpark insgesamt, Werte der Verlustleistung in Abhängigkeit von dem jeweiligen Arbeitspunkt angeben.

Mit diesen zusätzlichen blindleistungsbedingten Verlusten auf Parkebene können die Gesamtverluste berechnet und aufintegriert werden. Ein Vorschlag ist, dass ein solches Verfahren, das als Blindleistungsmeter bezeichnet werden kann, neben der aufsummierten Verlustenergie auch die Blindenergiemenge abspeichert und bspw. 15 Minuten Mittelwerte der ausgetauschten Blindleistung.

**Patentansprüche**

1. Verfahren zum Erfassen einer Verlustleistung beim Betreiben eines wenigstens eine Windenergieanlage (100, 311, 312) aufweisenden Windenergiesystems (302), das elektrische Leistung an einem Netzanschlusspunkt in ein elektrisches Versorgungsnetz (316, 414) einspeist, wobei

    - in einem aktuellen Arbeitspunkt des Windenergiesystems (302), elektrische Leistung in das elektrische Versorgungsnetz (316, 414) mit einem Wirkleistungsanteil und einem Blindleistungsanteil eingespeist wird, umfassend die Schritte,
    - Erfassen einer durch das Einspeisen der elektrischen Leistung in dem aktuellen Arbeitspunkt verursachten Gesamtverlustleistung, und
    - Schätzen einer durch das Einspeisen des Blindleistungsanteils in dem aktuellen Arbeitspunkt verursachten Blindleistungsverlustleistung ($P_{VQ}$), wobei
    - die Blindleistungsverlustleistung ($P_{VQ}$) aus einer Differenz zwischen der Gesamtverlustleistung ($Pv$) und einer dem aktuellen Arbeitspunkt zugeordneten Wirkleistungsverlustleistung ($P_{VP}$) bestimmt wird, wobei
    - die Wirkleistungsverlustleistung ($P_{VP}$) einer Verlustleistung eines Vergleichsarbeitspunktes entspricht, in dem

        - gleich viel Wirkleistung (P) wie im aktuellen Arbeitspunkt eingespeist wird, aber
        - keine Blindleistung eingespeist wird.

2. Verfahren nach Anspruch 1, **dadurch gekennzeichnet, dass**

    - in Voruntersuchungen, jeweils in wenigstens einem Referenzarbeitspunkt,

        - Wirkleistung (P) aber keine Blindleistung eingespeist wird,

    - eine Verlustleistung als Referenzverlustleistung erfasst wird, und
    - die erfasste Referenzverlustleistung zusammen mit der eingespeisten Wirkleistung (P) des Referenzarbeitspunktes als Referenzwerte abgespeichert werden,

    - optional zusammen mit einer oder mehreren Arbeitspunktrandbedingungen des Referenzarbeitspunktes, und

    - die Wirkleistungsverlustleistung ($P_{VP}$) des aktuellen Arbeitspunktes aus wenigstens einer abgespeicherten Referenzverlustleistung jeweils eines Referenzarbeitspunktes bestimmt wird, insbesondere so, dass
    - in Abhängigkeit von dem aktuellen Arbeitspunkt ein Referenzarbeitspunkt ausgewählt wird, und die dazu abgespeicherte Referenzverlustleistung als Wirkleistungsverlustleistung ($P_{VP}$) verwendet wird, oder die Wirkleistungsverlustleistung ($P_{VP}$) aus der abgespeicherten Referenzverlustleistung extrapoliert wird, oder
    - in Abhängigkeit von dem aktuellen Arbeitspunkt mehrere Referenzarbeitspunkte ausgewählt werden, und die Wirkleistungsverlustleistung ($P_{VP}$) aus den dazu abgespeicherten Referenzverlustleistungen interpoliert oder extrapoliert wird.

3. Verfahren nach Anspruch 1 oder 2, **dadurch gekennzeichnet, dass**

    - wenn das Windenergiesystem (302) eine oder mehrere Windenergieanlagen (100, 311, 312) aufweist,
    - zum Bestimmen der Wirkleistungsverlustleistung ($P_{VP}$) in Voruntersuchungen,

        - jede Windenergieanlage (100, 311, 312) jeweils in wenigstens einem Anlagenreferenzarbeitspunkt mit einer Anlagenwirkleistung betrieben wird,
        - jeweils eine Verlustleistung der Windenergieanlage (100, 311, 312) als Anlagenreferenzverlustleistung erfasst wird, und
        - die erfasste Anlagenreferenzverlustleistung und die Anlagenwirkleistung abgespeichert werden, optional mit einer abgegebenen Blindleistung und/oder wenigstens einer Arbeitspunktrandbedingung, und

    - die Wirkleistungsverlustleistung ($P_{VP}$) des aktuellen Arbeitspunktes aus jeweils wenigstens einer abgespeicherten Anlagenreferenzverlustleistung jeder Windenergieanlage (100, 311, 312) bestimmt wird, insbesondere so, dass
    - zu jeder Windenergieanlage (100, 311, 312) in Abhängigkeit von dem Wirkleistungsanteil des aktuellen Arbeitspunktes eine abgespeicherte Anlagenreferenzverlustleistung abgerufen oder extrapoliert, oder aus mehreren abgespeicherten Anlagenreferenzverlustleistungen durch Interpolation oder Extrapolation bestimmt wird, und

- die Wirkleistungsverlustleistung ($P_{VP}$) aus einer Summe aller abgerufenen bzw. durch Interpolation oder Extrapolation bestimmten Anlagenreferenzverlustleistungen bestimmt wird.

4. Verfahren nach einem der vorstehenden Ansprüche, **dadurch gekennzeichnet, dass**

- der Vergleichsarbeitspunkt und der aktuelle Arbeitspunkt jeweils aus Anlagenarbeitspunkten gebildet werden, insbesondere so, dass
- der Wirkleistungsanteil des aktuellen Arbeitspunktes bzw. des Vergleichsarbeitspunktes aus einer Summe der Wirkleistungen der Anlagenarbeitspunkte aller Windenergieanlagen (100, 311, 312) gebildet wird, und
- der Blindleistungsanteil des aktuellen Arbeitspunktes bzw. des Vergleichsarbeitspunktes aus einer Summe aller Blindleistungen der Anlagenarbeitspunkte aller Windenergieanlagen (100, 311, 312) und des Blindleistungsbedarfes des Parknetzes (114) gebildet wird.

5. Verfahren nach einem der vorstehenden Ansprüche, **dadurch gekennzeichnet, dass** eine, oder die in Voruntersuchungen erfasste Referenzverlustleistung zusammen mit einer oder mehreren Arbeitspunktrandbedingungen abgespeichert wird aus der Liste aufweisend:

- eine Netzspannung des elektrischen Versorgungsnetzes (316, 414),
- eine von wenigstens einer Windenergieanlage (100, 311, 312) erzeugte Blindleistung,
- eine Zwischenkreisspannung eines Wechselrichters der wenigstens einen Windenergieanlage (100, 311, 312), und
- eine Außentemperatur.

6. Verfahren nach einem der vorstehenden Ansprüche, **dadurch gekennzeichnet, dass**

- zum Erfassen von Verlustleistungen der Windenergieanlage (100, 311, 312) bzw. einer der Windenergieanlagen (100, 311, 312)
- eine, mehrere oder alle Verlustleistungsrandbedingungen erfasst und verwendet werden aus der Liste aufweisend

- eine bzw. die Netzspannung des elektrischen Versorgungsnetzes (316, 414),
- eine Zwischenkreisspannung eines Wechselrichters der Windenergieanlage (100, 311, 312),
- eine Kühlwassertemperatur des Wechselrichters der Windenergieanlage (100, 311, 312),

- eine Temperatur wenigstens eines Halbleiterschalters des Wechselrichters der Windenergieanlage (100, 311, 312),
- eine Schaltfrequenz des Wechselrichters, und
- eine aktuelle Toleranzbandweite des Wechselrichters.

7. Verfahren nach einem der vorstehenden Ansprüche, **dadurch gekennzeichnet, dass**

- zum Erfassen von Verlustleistungen der Windenergieanlage (100, 311, 312) bzw. einer der Windenergieanlagen (100, 311, 312) Verlustleistungen gemessen, berechnet oder anderweitig erfasst werden, aus der Liste aufweisend:
- Durchlassverluste, insbesondere von Halbleitern und Dioden jeweils einer bzw. der Wechselrichteranordnung, und/oder

- Verluste an Drosseln an einem Ausgang der Wechselrichteranordnung,
- Verluste an Leitungen zwischen einer Windenergieanlage (100, 311, 312) und einem bzw. dem Netzanschlusspunkt, und

- Schaltverluste, insbesondere von

- Halbleiterschaltern der Wechselrichteranordnung und/oder
- Dioden der Wechselrichteranordnung, wobei insbesondere

- die Schalterverluste zu jedem Schaltvorgang berechnet werden.

8. Verfahren nach einem der vorstehenden Ansprüche, **dadurch gekennzeichnet, dass**

- die Blindleistungsverlustleistung ($P_{VQ}$) über die Zeit aufintegriert wird, um eine durch Blindleistungseinspeisung bedingte Blindleistungsverlustenergie zu erfassen, wobei
- die Gesamtverlustleistung am Netzanschlusspunkt erfasst wird, oder
- Anlagenverlustleistungen jeweils an einem Ausgang jeder Windenergieanlage (100, 311, 312) erfasst werden
oder dass
- für jede Windenergieanlage (100, 311, 312) einzeln jeweils eine Anlagenblindleistungsverlustleistung ermittelt und über die Zeit zu einer Anlagenblindleistungsverlustenergie aufintegriert wird, wobei

- die Anlagenblindleistungsverlustleistung aus einer Differenz zwischen einer Verlustleistung der Windenergieanlage (100, 311, 312) im aktuellen Arbeitspunkt und einer Anlagenreferenzverlustleistung bestimmt wird, die aus einer abgespeicherten Anlagenreferenzverlustleistung abgeleitet wird, oder aus mehreren abgespeicherten Anlagenreferenzverlustleistungen durch Interpolation oder Extrapolation bestimmt wird, und

- eine Blindleistungsverlustenergie des Windenergiesystems (302) als Summe der Anlagenblindleistungsverlustenergien aller Windenergieanlagen (100, 311, 312) gebildet wird.

9. Verfahren nach einem der vorstehenden Ansprüche, **dadurch gekennzeichnet, dass**

- zum Erfassen der Gesamtverlustleistung in dem aktuellen Arbeitspunkt Übertragungsverluste zwischen der wenigstens einen Windenergieanlage (100, 311, 312) und dem Netzanschlusspunkt berücksichtigt werden, und/oder dass
- zum Erfassen der Wirkleistungsverlustleistung ($P_{VP}$) in einem bzw. dem Referenzarbeitspunkt Übertragungsverluste zwischen der wenigstens einen Windenergieanlage (100, 311, 312) und dem Netzanschlusspunkt berücksichtigt werden, und/oder
- zum Erfassen einer Anlagenreferenzverlustleistung in einem bzw. dem jeweiligen Referenzanlagenarbeitspunkt jeweils Übertragungsverluste zwischen der Windenergieanlage (100, 311, 312) und dem Netzanschlusspunkt berücksichtigt werden.

10. Verfahren nach einem der vorstehenden Ansprüche, **dadurch gekennzeichnet, dass**

- zum Erfassen der Blindleistungsverlustleistung ($P_{VQ}$) für die bzw. jede Windenergieanlage (100, 311, 312)

- in Abhängigkeit von der Wirkleistung (P) des aktuellen Arbeitspunktes und
- in Abhängigkeit von einer Phasenverschiebung zwischen einer Ausgangsspannung an der Windenergieanlage (100, 311, 312) und einer Spannung an dem Netzanschlusspunkt
- ein Anlagenreferenzarbeitspunkt bestimmt wird, sodass

- die Anlagenreferenzarbeitspunkte aller Windenergieanlagen (100, 311, 312) zusammen den Vergleichsarbeitspunkt realisieren, und wobei
- wenigstens einer der Anlagenarbeitspunkte einen Blindleistungsanteil aufweist, und

- zu jedem Anlagenreferenzarbeitspunkt eine Anlagenreferenzverlustleistung aus einer abgespeicherten Anlagenreferenzverlustleistung bestimmt wird, oder aus mehreren abgespeicherten Anlagenreferenzverlustleistungen durch Interpolation oder Extrapolation bestimmt wird, und
- die Blindleistungsverlustleistung ($P_{VQ}$) des Windenergiesystems (302) bestimmt wird

- aus einer Gesamtverlustleistung des aktuellen Arbeitspunktes,
- abzüglich einer Summe der Anlagenreferenzverlustleistungen, und
- zuzüglich aktueller Übertragungsverluste, die in dem aktuellen Arbeitspunkt durch die Übertragung des Blindleistungsanteils von den Windenergieanlagen (100, 311, 312) zum Netzanschlusspunkt entstehen, wobei vorzugsweise
- die aktuellen Übertragungsverluste durch eine Lastflussberechnung, oder aus einer Tabelle ermittelt werden, und/oder wobei
- zur Berechnung der Blindleistungsverlustleistung ($P_{VQ}$) Referenzübertragungsverluste abgezogen werden, die eine Summe bilden von Übertragungsverlusten, die jeweils durch eine Übertragung eines Blindleistungsanteils in einem Anlagenreferenzarbeitspunkt von der jeweiligen Windenergieanlage (100, 311, 312) zum Netzanschlusspunkt entstehen können.

11. Verfahren nach einem der vorstehenden Ansprüche, **dadurch gekennzeichnet, dass**

- Voruntersuchungen bzw. die Voruntersuchungen sukzessive wiederholt werden, um nach und nach mehr Referenzwerte aufzunehmen und abzuspeichern, wobei insbesondere
- die Voruntersuchungen im laufenden Betrieb durchgeführt werden, wenn Arbeitspunkte auftreten, bei denen keine Blindleistung eingespeist wird, und/oder
- die Voruntersuchungen im laufenden Betrieb durchgeführt werden, und Arbeitspunkte temporär so verändert werden, dass keine Blindleistung eingespeist wird.

12. Windenergiesystem (302) mit wenigstens einer Windenergieanlage (100, 311, 312) zum Einspeisen elektrischer Leistung an einem Netzanschlusspunkt in ein elektrisches Versorgungsnetz (316, 414), wobei das Windenergiesystem (302) dazu vorbereitet ist,

- in einem aktuellen Arbeitspunkt des Windenergiesystems (302) elektrische Leistung in das elektrische Versorgungsnetz (316, 414) mit einem Wirkleistungsanteil und einem Blindleistungsanteil einzuspeisen, und

folgende Schritte durchzuführen:

- Erfassen einer durch das Einspeisen der elektrischen Leistung in dem aktuellen Arbeitspunkt verursachten Gesamtverlustleistung, und
- Schätzen einer durch das Einspeisen des Blindleistungsanteils in dem aktuellen Arbeitspunkt verursachten Blindleistungsverlustleistung ($P_{VQ}$) wobei
- die Blindleistungsverlustleistung ($P_{VQ}$) aus einer Differenz zwischen der Gesamtverlustleistung und einer dem aktuellen Arbeitspunkt zugeordneten Wirkleistungsverlustleistung ($P_{VP}$) bestimmt wird, wobei
- die Wirkleistungsverlustleistung ($P_{VP}$) einer Verlustleistung eines Vergleichsarbeitspunktes entspricht, in dem

- gleich viel Wirkleistung (P) wie im aktuellen Arbeitspunkt eingespeist wird, aber

- keine Blindleistung eingespeist wird.

13. Windenergiesystem (302) nach Anspruch 12, **dadurch gekennzeichnet, dass** es dazu vorbereitet ist, ein Verfahren nach einem der Ansprüche 1 bis 11 durchzuführen, wobei das Windenergiesystem (302) insbesondere eine Steuerungseinrichtung aufweist und das betreffende Verfahren auf der Steuerungseinrichtung implementiert ist.

Fig. 1

Fig. 2

Fig. 3

Fig. 4

**Europäisches Patentamt**

**European Patent Office**

**Office européen des brevets**

# EUROPÄISCHER RECHERCHENBERICHT

**Nummer der Anmeldung**

EP 21 15 3308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | DE 10 2007 041793 A1 (INST SOLARE ENERGIEVERSORGUNGSTECHNIK ISET [DE]) 5. März 2009 (2009-03-05)<br>* Absätze [0002], [0031], [0032], [0037], [0038], [0052] - [0056]; Anspruch 1 *<br>----- | 1-9, 11-13<br><br>10 | INV.<br>H02J3/16<br>H02J3/38<br><br>ADD.<br>G01R21/133<br>F03D7/02 |
| | | | **RECHERCHIERTE SACHGEBIETE (IPC)**<br><br>H02J<br>G01R<br>F03D |

Der vorliegende Recherchenbericht wurde für alle Patentansprüche erstellt

| Recherchenort | Abschlußdatum der Recherche | Prüfer |
|---|---|---|
| München | 14. Juni 2021 | Sulic, Tomislav |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 3308

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2021

| Im Recherchenbericht angeführtes Patentdokument | Datum der Veröffentlichung | Mitglied(er) der Patentfamilie | Datum der Veröffentlichung |
|---|---|---|---|
| DE 102007041793 A1 | 05-03-2009 | KEINE | |

Für nähere Einzelheiten zu diesem Anhang : siehe Amtsblatt des Europäischen Patentamts, Nr.12/82

EPO FORM P0461